**Europäisches Patentamt**

**European Patent Office**

**Office européen des brevets**

(19)

(11) Veröffentlichungsnummer: **0 294 776 B1**

# (12) EUROPÄISCHE PATENTSCHRIFT

(45) Veröffentlichungstag der Patentschrift: **02.01.92**

(21) Anmeldenummer: **88109097.1**

(22) Anmeldetag: **08.06.88**

(51) Int. Cl.5: **F16H 61/46**, F04B 49/08

---

(54) Steuerkreis für ein hydraulisches Verstellglied.

---

(30) Priorität: **09.06.87 US 60150**
**11.09.87 US 96418**

(43) Veröffentlichungstag der Anmeldung:
**14.12.88 Patentblatt 88/50**

(45) Bekanntmachung des Hinweises auf die
Patenterteilung:
**02.01.92 Patentblatt 92/01**

(84) Benannte Vertragsstaaten:
**DE ES FR GB IT**

(56) Entgegenhaltungen:
**DE-A- 1 924 417        DE-A- 2 422 480**
**FR-A- 1 553 259        FR-A- 2 385 917**
**GB-A- 2 083 249        US-A- 3 002 462**
**US-A- 4 022 023        US-A- 4 293 284**
**US-A- 4 648 803**

(73) Patentinhaber: **DEERE & COMPANY**
**1 John Deere Road**
**Moline, Illinois 61265(US)**

(72) Erfinder: **Schmidt, Randy Pete**
**4110 Horseshoe Drive**
**Cedar Falls Iowa 50613(US)**
Erfinder: **Brandau, Steven George**
**3421 Boulder Drive**
**Cedar Falls Iowa 50613(US)**
Erfinder: **Miller, James Anton**
**1727 Four Winds Drive**
**Cedar Falls Iowa 50613(US)**
Erfinder: **Stephenson, Dwight Bruce**
**13678 Glendale Trail**
**Savage Minnesota 55378(US)**

(74) Vertreter: **Feldmann, Bernhard et al**
**DEERE & COMPANY European Office, Patent**
**Department Steubenstrasse 36-42 Postfach**
**503**
**W-6800 Mannheim 1(DE)**

**Beschreibung**

Die Erfindung bezieht sich auf einen Steuerkreis für ein hydraulisches Verstellglied, welches durch einen über eine Steuerleitung zuführbaren Druck einstellbar ist. Der Steuerkreis weist Ventilmittel auf, die durch eine Druckdifferenz zwischen dem Austrittsdruck des Verstellgliedes und dem durch eine Signalleitung zugeführten, einer gewünschten Lastanforderung an das Verstellglied entsprechenden Druck derart betätigbar sind, daß bei ausreichender Druckdifferenz die Ventilmittel eine Ventilposition einnehmen, bei der zwischen Steuerleitung und dem Austritt des Verstellgliedes eine Verbindung existiert.

Als Verstellglieder kompen insbesondere Verstellpumpen, z. B. Radialkolben-Verstellpumpen mit Druck- und Durchflußkompensation, in Betracht. Radialkolben-Verstellpumpen werden vorzugsweise dort verwendet, wo die Hydraulikanforderung an das System in weiten Grenzen schwankt. Der Energiebedarf des Hydrauliksystems wird in Abhängigkeit des Lastbedarfs eingestellt. Dabei wird die Fördermenge solcher Pumpen entsprechend dem Druck der Hydraulikflüssigkeit in dem Pumpenantriebsgehäuse verstellt. Mit wachsender Fördermenge fällt der Druck im Pumpenantriebsgehäuse und umgekehrt. Die Pumpen haben den besonderen Vorteil, daß sie bei geringer Nachfrage zurückgedrosselt werden können, wobei ihr Leistungsbedarf reduziert wird. Weitere Einzelheiten finden sich in der US-A-3 002 462.

Eine typische Anwendung für ein solches System findet sich beispielsweise in Arbeitsfahrzeugen landwirtschaftlicher oder industrieller Art. Bei solch einer Anwendung wird die Ausgangsleistung der Pumpe dann auf einen minimalen Wert heruntergedrosselt, wenn keine Lastanforderung an das hydraulische System vorliegt. Mit steigendem Lastbedarf wird auch der Pumpenausstoß erhöht.

Leider haben diese Pumpen den Nachteil, daß sie von Natur aus instabil sind und diese Instabilität durch einen Steuerkreis für die Pumpe kompensiert werden muß. Insbesondere vergrößert die Pumpe ihren Kolbenhub (Durchsatz) schneller, als sie den Kolbenhub vermindert, denn um den Kolbenhub zu verringern, muß der Nocken, der den Kolben beeinflußt, eine vollständige Umdrehung durchführen, bevor die Kolbenausgangsströmung reduziert wird. Diese in dem Bauprinzip der Pumpe liegende Verzögerung kann bedeutsame Rückkopplungsprobleme verursachen, sofern kein zweckentsprechender Steuerkreis verwendet wird.

Die US-A-4 293 284 zeigt einen Steuerkreis für Verstellpumpen der eingangs genannten Art. Die Ausgangsleistung der Verstellpumpe steigt mit fallendem Druck, der an den Pumpensteuerkolben angelegt wird, an und umgekehrt. Da die Druck-Durchflußmengen-Charakteristik, anhand derer die Ausgangsleistung der Pumpe gesteuert wird, von der Last abhängt, ist ein Steuerventil zur Druck-Durchfluß-Kompensation vorgesehen, welches den Druck einstellt, der an dem Pumpensteuerkolben anliegt. Das Ventil weist zwei Positionen auf und ist so vorgespannt, daß es in seiner ersten Position den Pumpensteuerkolben mit einem Vorratsbehälter verbindet und in seiner zweiten Position den Pumpensteuerkolben mit dem Austritt der Verstellpumpe verbindet. Eine Lastsignalleitung führt einen Druck, der der Lastanforderung an die Pumpe entspricht, zu einem Ende des Ventils, so daß das Ventil veranlaßt wird, seine erste Position einzunehmen. Der Druck des Pumpenauslasses liegt an der anderen Seite des Ventils an. Mit dieser Anordnung wird erreicht, daß der Ausgangsdruck der Pumpe weiter ansteigt, bis er die Lastnachfrage an die Pumpe um einen solchen Betrag übersteigt, der erforderlich ist, um die Federvorspannung des Ventils zu überwinden.

Bei der Anordnung gemäß US-A-4 293 284 treten Probleme mit der Zeitverzögerung auf. Der Druck von der Lastanforderung benötigt einen kleinen aber bedeutsamen Zeitbetrag, um durch die Lastsignalleitung zurück zu dem Kompensationsventil zu gelangen. Dagegen liegt der Pumpenauslaßdruck wegen der räumlichen Nähe zwischen Ventil und Pumpe beinahe sofort an dem Ventil an. Hieraus folgt, daß die Pumpenleistung typischerweise über den gewünschten Druck hinausschießt, und zwar in beiden Richtungen. Dies bedeutet, daß dann, wenn der Druck ansteigen sollte, dieser zu stark ansteigt, und wenn er abfallen sollte, dieser zu stark abfällt. Im Ergebnis führt dies dazu, daß der Austrittsdruck um den gewünschten Druck oszilliert, anstatt sich auf diesen Druck zu stabilisieren.

Die US-PS Re. 29 673 lehrt einen komplizierten Lastabtastkreis, in welchem der Druck aufbereitet wird, bevor er den Steuerkolben der Pumpe erreicht. Trotz der Aufbereitung bleibt der Druck repräsentativ für die Lastnachfrage an die Pumpe. Außerdem unterscheidet sich diese Anordnung von der erstgenannten US-PS dadurch, daß eine Drosselstelle vorgesehen ist, die in einer Verbindungsleitung zwischen Pumpensteuerkolben und Vorratsbehälter angeordnet ist. Diese Drosselstelle stellt sicher, daß sich ein minimaler Unterschiedsdruck zwischen dem Vorratsbehälter und dem Steuerkolben einstellt, sobald ein Druck von dem Lastabfragekreis geliefert wird. Gemäß der US-A-4 293 284 wird ein Durchfluß von und zum Steuerkolben, nicht jedoch an ihm vorbei erlaubt. Im Gegensatz hierzu wird gemäß der US-PS Re. 29 673 der Durchfluß an dem Steuerkolben vorbei durch die Drosselstelle geführt.

Ein weiteres Beispiel für einen Steuerkreis zur Beeinflussung einer Verstellpumpe findet sich in der US-A-4 648 803. Dieser Steuerkreis kompensiert die meisten der Pumpe innewohnenden Instabilitäten, er hält jedoch noch einiges zu wünschen übrig. Das Steuerventil dieses Steuerkreises verstellt seine Position auf der Grundlage der Druckdifferenz zwischen dem Pumpenantriebsgehäuse und dem Pumpenaustritt.

Wenn der Austrittsdruck sprunghaft ansteigt, tritt eine scharfe Spitze im Druck des Antriebsgehäuses und im Austrittsdruck auf.

Gemäß der US-A-4 648 803 muß diese Druckspitze durch die Antriebsgehäusedrosselstelle abgeleitet werden. Dies bedeutet, daß die Antriebsgehäusedrosselstelle relativ groß bemessen sein muß, um die Druckspitze zu glätten, was zu einem konstanten Strömungsverlust entsprechend dem Durchfluß durch die Drosselstelle im Zustand fehlender Druckspitze führt.

Ferner ist gemäß der US-A-4 648 803 eine Position 4 in dem Hauptsteuerventil vorgesehen, um extreme Spitzen zu kompensieren. Jedoch müssen die Spitzen, die erforderlich sind, um das Steuerventil in diese Position 4 zu bewegen, ziemlich kräftig sein. Die eher normalen Spitzen müssen durch die Antriebsgehäusedrosselstelle abgeleitet werden.

Aus der GB-A-2 083 249 ist ein hydraulischer Steuerkreis für eine Verstellpumpe bekannt geworden. Bei diesem Steuerkreis sind in einer Verbindungsleitung zwischen Ventilmitteln und einer Steuerleitung der Verstellpumpe ein Durchflußbegrenzungsmittel und zwischen den Ventilmitteln und einem Sammelbehälter, der mit dem Eintritt der Verstellpumpe in Verbindung steht, Überdruckmittel angeordnet. Die Überdruckmittel erlauben dann einen Durchfluß von der Seite der Ventilmittel zu dem Sammelbehälter, wenn der Druck auf der Seite der Ventilmittel einen vorgebbaren Wert übersteigt. Hierdurch sollen Instabilitäten im Steuerkreis vermieden werden.

Die mit der Erfindung zu lösende Aufgabe wird darin gesehen, einen Steuerkreis anzugeben, durch den die zuvor genannten Oszillationsprobleme vermieden werden können. Es soll ein Steuerkreis mit gesteigerter Stabilität und folglich verminderter Wahrscheinlichkeit, daß Wechselwirkungen mit anderen hydraulischen Komponenten auftreten, bereitgestellt werden. Ein weiterer Zweck der Erfindung ist es, solche Steuerkreise in kompakter Bauweise bereitzustellen, die einen vorzüglichen dynamischen Frequenzgang aufweisen.

Die Aufgabe wird erfindungsgemäß durch die kennzeichnenden Merkmale des Patentanspruches 1 gelöst.

Die Durchflußbegrenzungsmittel dienen insbesondere der Dämpfung des Flüssigkeitsdurchflusses, so daß ein Über-schwingen des Steuerkreises vermieden wird. Belastungsspitzen können durch die Überdruckmittel abgebaut werden. Einfachheitshalber kann im folgenden davon ausgegangen werden, daß der Pumpeneintritt und ein Vorratsbehälter zusammenliegen. Durch die Einwegdurchflußmittel kann ein höherer Druck, der an der Steuerleitung ansteht, in Richtung der Ventilmittel abgebaut werden.

Die Aufgabe wird ferner durch die kennzeichnenden Merkmale des Patentanspruches 2 gelöst. Das zweite Durchflußbegrenzungsmittel erlaubt einen relativ langsamen, jedoch stetigen Druckausgleich zwischen Pumpenkurbelwanne und Pumpeneintritt. Die Ableitung des Mediums wird zwar zugelassen, die Durchflußmenge ist jedoch begrenzt.

Es ist von Vorteil, wenn die Ventilmittel eine Ventilposition aufweisen, in der sie die Steuerleitung mit dem Pumpeneintritt verbinden. Vorzugsweise ist das Ventilmittel in diese Ventilposition vorgespannt, so daß in dieser Grundposition der Druck im Kurbelgehäuse der Pumpe dem Eintrittsdruck der Pumpe entspricht.

Zweckmäßigerweise handelt es sich bei den Durchflußbegrenzungsmitteln um Drosselstellen.

Die Vorspannung der Ventilmittel in eine Ventilposition erfolgt vorzugsweise durch Federmittel, die derart einstellbar sind, daß das Ventilmittel aus seiner Grundposition verstellt wird, sobald die Druckdifferenz zwischen Pumpenaustritt und der Lastmeldeleitung einen gewünschten Wert überschreitet.

Bevorzugte Bemessungen der Durchflußbegrenzungsmittel sind den Unteransprüchen 11 bis 14 zu entnehmen. Die Bemessung gemäß Patentanspruch 14 ist dann von besonderem Vorteil, wenn auf das der ersten Drosselstelle parallel geschaltete Rückschlagventil verzichtet wird.

Einer besonders vorteilhaften Ausführung des erfindungsgemäßen Steuerkreises zufolge sind zwei Drosselstellen in Serie zwischen ein Zwei-Positionen-Durchflußkompensationsventil und einen Vorratsbehälter bzw. den Eintritt einer Verstellpumpe geschaltet. Der Steuerschieber der Pumpe ist mit einer Stelle, die zwischen den beiden Drosselstellen liegt, verbunden. Ein Überdruckventil liegt parallel zu den beiden Drosselstellen und erlaubt einen Durchfluß von dem Ventil zu dem Vorratsbehälter. Ein Rückschlagventil ist parallel zu der Drosselstelle geschaltet, die benachbart zum Ventil, d. h. zu der zwischen dem Ventil und der zum Steuerschieber führenden Leitung, angeordnet ist. Das Rückschlagventil erlaubt einen Durchfluß von der Leitung des Steuerschiebers zum Durchflußkompensationsventil, jedoch nicht umgekehrt.

Der erfindungsgemäße Steuerkreis kann auch so ausgebildet sein, daß zwar ein Rückschlagventil verwendet wird, jedoch auf die Drosselstelle zwischen Pumpensteuerschieber und Vorratsbehälter verzichtet wird. Dadurch wird ein Vorbeifließen der Hydraulikflüssigkeit an dem Pumpensteuerschieber unterbunden. Ein Steuerkreis, wie er durch eine der genannten Ausgestaltungen der Erfindung gekennzeichnet ist, ist in der Lage, die Oszillationen zu unterdrücken. Durch eine gewissenhafte Bemessung der Drosselstellen und des Öffnungsdruckes des Überdruckventils läßt sich erreichen, daß die Pumpe den gewünschten Austrittsdruck gleich erreicht, ohne um diesen Druck herumzuschwanken. Selbst wenn die genannten Elemente nicht optimal bemessen sein sollten, gewährleisten sie eine Dämpfung, durch die der erwünschte Pumpendruck rasch erreicht wird.

Gemäß einer bevorzugten Ausgestaltung der Erfindung enthält der Steuerkreis ein druckkompensiertes Vierwege-Steuerschieberventil, dessen Lage durch den Eintritts- und Austrittsdruck der Pumpe beeinflußbar ist. Ein lastfühlendes Dreiwege-Steuerschieberventil liegt teilweise in Serie mit dem druckkompensierenden Ventil. Seine Position wird durch den lastfühlenden Druck und den Pumpenaustrittsdruck beeinflußt. Ein Rückschlagventil und eine Drosselstelle sind parallel zwischen den beiden Steuerschieberventilen und dem Pumpenkurbelgehäuse angeordnet. Schließlich ist ein Entlastungsventil zwischen der Eintrittsleitung und der Steuerventilseite des Rückschlagventils und der Drosselstelle geschaltet.

Der Pumpenhub kann durch jede der beiden Steuerventile unterdrückt werden. Er kann jedoch nur dann heraufgesetzt werden, wenn beide Steuerventile sich in der richtigen Lage befinden. Druckspitzen des Pumpenkurbelgehäuses werden durch das Entlastungsventil zur Eintrittsleitung abgeleitet, wodurch Oszillationen aufgrund dieser Druckspitzen minimiert werden. Die Kurbelgehäusedrosselstelle läßt sich beträchtlich verkleinern, da die Druckspitzen durch das Entlastungsventil abgeführt werden. Dennoch kann es in manchen Situationen vorteilhaft sein, sowohl das Entlastungsventil gemäß der vorliegenden Erfindung als auch überdimensionierte Drosselstellen zu verwenden.

Alternativ zu dieser Ausführungsart kann auch ein einfacherer Steuerkreis gemäß der vorliegenden Erfindung verwendet werden. Bei diesem wird ein vorgesteuertes, druckkompensiertes Dreiwege-Steuerventil und ein Kurbelgehäuse-Entlastungsventil verwendet. Das lastfühlende Dreiwege-Steuerschieberventil, das Rückschlagventil und die hierzu parallel geschaltete Drosselstelle entfallen hierbei jedoch. Druckspitzen des Kurbelgehäuses werden auch hier über das Entlastungsventil abgebaut, so daß die Größe der Kurbelgehäusedrosselstelle beträchtlich reduziert werden kann. Ferner wird die Lage des druckkompensierenden Steuerschieberventils durch den Eintrittsdruck und den Austrittsdruck gesteuert, was gegenüber der US-A-4 648 803 zu einer beträchtlichen Verbesserung der Stabilität führt.

Weitere vorteilhafte Ausgestaltungen der Erfindung sind den Unteransprüchen entnehmbar.

Anhand der Zeichnung, die mehrere Ausführungsbeispiele der Erfindung zeigt, sollen die Erfindung sowie weitere Vorteile und vorteilhafte Ausgestaltungen der Erfindung näher beschrieben und erläutert werden.

Es zeigt:

Fig. 1     das Prinzipbild eines erfindungsgemäßen Steuerkreises,

Fig. 2     die schematische Darstellung eines Steuerkreises gemäß einer Ausführungsart der Erfindung,

Fig. 3     den Querschnitt durch ein Ventil, welches einen Teil des in Fig. 2 schematisch dargestellten Steuerkreises verkörpert,

Fig. 4     einen Querschnitt des Ventils aus Fig. 2 entlang der Linie 4 - 4 in Fig. 3,

Fig. 5     eine Detaildarstellung des Rückschlag-Drosselstellen-Ventils entlang der Linie 5 - 5 in Fig. 4,

Fig. 6     die schematische Darstellung eines Steuerkreises gemäß einer alternativen Ausführungsart der Erfindung und

Fig. 7     den Querschnitt durch ein Ventil, welches einen Teil des in Fig. 6 schematisch dargestellten Steuerkreises verkörpert.

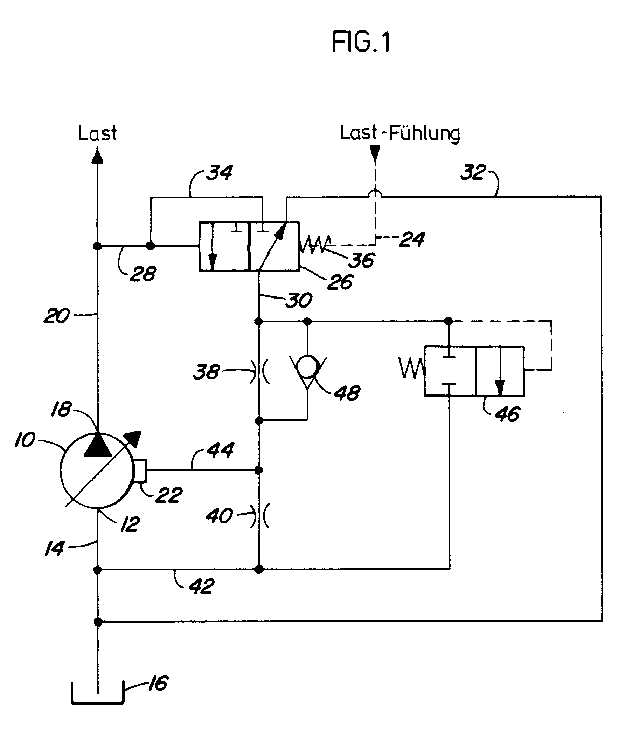

Fig. 1 zeigt eine schematische Darstellung eines erfindungsgemäßen Steuerkreises. Ein hydraulisches Verstellglied 10, hier eine Verstellpumpe, hat einen Eintritt 12, der über die Leitung 14 mit einem Vorratsbehälter 16 verbunden ist, und einen Austritt 18, der über die Leitung 20 mit einer nicht dargestellten hydraulischen Last verbunden ist. Die Pumpenverstellung wird durch eine Pumpensteuerung 22, z. B. eine Kolbensteuerung, beeinflußt.

Eine lastfühlende Lastmeldeleitung 24 führt den Druck, der durch die Last von der Pumpe 10 gefordert wird. Der Druck der Lastmeldeleitung 24 beeinflußt Ventilmittel 26, die die Fördermenge und den Förderdruck der Verstellpumpe 10 in Abhängigkeit des Bedarfs an der Last einstellen. Bei den Ventilmitteln 26 handelt es sich um ein 2-Positionen-3-WegeDruckausgleichssteuerventil, vorzugsweise des Steuerschiebertyps. Der Druck der Lastmeldeleitung 24 liegt an einem Ende des Steuerventils 26 an. Die Leitung 28 legt den Druck der Pumpenaustrittsleitung 20 an das andere Ende des Druckausgleichssteuerventils 26 an. In seiner ersten Position verbindet das Steuerventil 26 über die Leitung 32 eine Hauptdrosselleitung 30 mit dem Vorratsbehälter 16. In seiner zweiten Position verbindet das Steuerventil 26 über die Leitungen 28 und 34 die Hauptdrosselleitung 30 mit der Pumpenaustrittsleitung 20. Das Druckausgleichssteuerventil 26 ist durch eine Feder 36 in seine erste Position vorgespannt.

In der Hauptdrosselleitung 30 liegen zwei Durchflußbegrenzungsmittel 38, 40, z. B. Drosselstellen. Das Ende der Hauptdrosselleitung 30, das dem Druckausgleichssteuerventil 26 abgewandt ist, ist über die Leitungen 42 und 14 mit dem Vorratsbehälter 16 verbunden. Die Pumpensteuerung 22 ist mit der Hauptdrosselleitung 30 durch die Steuerleitung 44 verbunden. Die Verbindungsstelle auf der Hauptdrosselleitung 30 befindet sich zwischen den Drosselstellen 38 und 40. Die Drosselstelle 38 ist zwischen dem Druckausgleichssteuerventil 26 und der Steuerleitung 44 angeordnet, und die Drosselstelle 40 ist zwischen der Steuerleitung 44 und dem Vorratsbehälter 16 angeordnet. Die Pumpensteuerung 22 beeinflußt die Pumpe 10 derart, daß die Pumpenleistung ansteigt, wenn der Druck in der Steuerleitung 44 abnimmt und umgekehrt.

Ein Druckminderungsmittel 46, z. B. ein Überdruckventil, liegt parallel zu den beiden Drosselstellen 38, 40 zwischen dem Druckausgleichssteuerventil 26 und dem Vorratsbehälter 16.

Schließlich sind Einwegdurchflußmittel 48, z. B. ein Rückschlagventil, parallel zu der Drosselstelle 38 derart angeordnet, daß der Durchfluß durch das Rückschlagventil 48 von einem Punkt der Hauptdrosselleitung 30 aus, der zwischen den Drosselstellen 38 und 40 liegt, zum Druckausgleichssteuerventil 26 erfolgen kann, nicht jedoch in entgegengesetzter Richtung.

Die Wirkungsweise des Steuerkreises ist folgende:

Als Ausgangslage wird angenommen, daß sich die Pumpe 10 in Bereitschaftsbetrieb, z. B. in einem Betrieb mit geringer Ausgangsleistung, befindet. Wird nun eine Last an das System angelegt, so wird das Druckausgleichssteuerventil 26 infolge der gemeinsam wirkenden Kräfte der Feder 36 und der Druckanforderung in der Lastmeldeleitung 24 in seine erste Position bewegt, wie dies in der Figur 1 dargestellt ist. Hierdurch wird die Hauptdrosselleitung 30 mit dem Vorratsbehälter 16 verbunden. Der Druck in der Steuerleitung 44 nimmt wegen des Durchflusses durch das Rückschlagventil 48, welches die Drosselstelle 38 überbrückt, rasch ab. Daher steigt die Pumpenleistung wunschgemäß sofort an. Wenn der Druck in der Pumpenaustrittsleitung 20 bis zu dem Punkt angestiegen ist, bei dem es die Summe der Kräfte des Drukkes in der Lastmeldeleitung 24 und der Vorspannkraft der Feder 36 übersteigt, bewegt sich das Druckausgleichssteuerventil 26 in seine zweite Position. Hierbei verbindet es die Pumpenaustrittsleitung 20 mit der Hauptdrosselleitung 30. Nun sperrt das Rückschlagventil 48, und der Druckanstieg kann nur noch langsam durch die Drosselstelle 38 übermittelt werden. Durch die plötzliche Verbindung der Austrittsleitung 20 mit der Hauptdrosselleitung 30 erhöht sich der Durchfluß durch das Ventil sprunghaft. Der Hauptteil der Durchflußmenge und des Durchflußimpulses fließt durch das Überdruckventil 46 ab. Der Öffnungsdruck des Überdruckventils 46 wird genau so eingestellt, daß er diesen Zweck gewährleistet. Der Druck in der Steuerleitung 44 steigt allmählich an, dies hat ein allmähliches Abnehmen der Ausgangsleistung der Pumpe 10 zur Folge. Es handelt sich hierbei um einen vergleichsweise langsamen Prozeß, der Zeit für eine Rückkopplung durch die Druckmeßleitung 24 läßt.

Sofern keine Veränderung der Rückkopplung durch die Lastmeldeleitung 24 eintritt, nimmt der Druck in der Austrittsleitung 20 so lange ab, bis er den Druck in der Steuerleitung 44 nur noch um den Betrag übersteigt, der erforderlich ist, um die Kraft der Feder 36 zu überwinden. Tatsächlich wird der Druck, welcher erforderlich ist, um die Kraft der Feder 36 zu überwinden, zum Bereitschaftsdruck der Pumpe 10.

Es ist ersichtlich, daß der Druck in der Druckleitung 20 normalerweise größer bleibt als der Druck in der Lastmeldeleitung 24, und zwar um mindestens den Betrag, der erforderlich ist, um die Kraft der Feder 36 zu überwinden. Sollte ein plötzliches Ansteigen der Last auftreten, so steigt der Pumpendruck entsprechend dem Durchfluß durch das Rückschlagventil 48 rasch an. Die Drosselstellen 38 und 40 sorgen dafür, daß das Überschießen des Druckes über einen gewünschten Druck hinaus minimiert wird.

Gemäß einer besonderen Ausführung der Erfindung wird eine JOHN DEERE-Verstellpumpe mit radialem Kolben verwendet, welche eine maximale Fördermenge von 65 cm$^3$ pro Umdrehung bei einem geforderten Maximaldruck von 225 bar hat. Die Drosselstelle 38 hat vorzugsweise einen Durchmesser von etwa 2,5 mm, und die Drosselstelle 40 hat vorzugsweise einen Durchmesser von etwa 1,5 mm, was einen maximalen Durchfluß durch die Drosselstellen von ungefähr 0,04 l pro Sekunde erlaubt. Das Überdruckventil 46 erlaubt einen Durchfluß von typischerweise etwa 0,03 l pro Sekunde. Es ist so eingestellt, daß es bei einem Druck von etwa 3 bar öffnet. Im Gegensatz hierzu ist das Rückschlagventil 48 so bemessen, daß es einen viel höheren Durchfluß in der Größenordnung von 0,2 l pro Sekunde erlaubt. Die Steuerventilfeder 36 ist so eingestellt, daß eine Druckdifferenz von etwa 20 bar zwischen Pumpenaustrittsleitung 20 und Lastmeldeleitung 24 erforderlich ist, um das Druckausgleichssteuerventil 26 von seiner ersten in seine zweite Position zu verschieben. Der Bereitschaftsdruck der Pumpe 10 wird auf etwa 20 bar eingestellt.

Der vorliegende Steuerkreis kann verschiedenartig modifiziert werden. Wenn die Drosselstellen 38, 40 mit größeren Durchmessern versehen sind, kann das Rückschlagventil 48 weggelassen werden. Die Drosselstelle 38 kann dann etwa 3,0 mm und die Drosselstelle 40 etwa 2,5 mm betragen, wobei ein maximaler Durchfluß von 0,13 l pro Sekunde ermöglicht wird, sofern die Drosselstellen 38, 40 in einem System verwendet werden, wie es im vorigen Abschnitt beschrieben wurde. Obwohl dies die gewünschte Dämpfung liefert, hat es den Nachteil eines relativ großen parasitären Durchflusses (0,13 l pro Sekunde). Es wird daher normalerweise vorteilhaft sein, die kleineren Drosselstellen mit dem Rückschlagventil zu verwenden.

Eine weitere Alternative sieht vor, die Drosselstelle 38 und das Rückschlagventil 48 zu verwenden, jedoch die Drosselstelle 40 und ihre Verbindungsleitung wegzulassen, d. h. es wird ein System verwendet, bei dem die Flüssigkeit zu und von der Steuerleitung 44 fließen, jedoch nicht an ihr vorbeiströmen kann.

Weitere Abwandlungen der vorliegenden Erfindung sind möglich. Beispielsweise können an Stelle der beschriebenen Verstellpumpe zur Einstellung der Durchflußmenge auch andere verstellbare hydraulische Komponenten, wie druckkompensierende Pumpen oder Ventile, durch den beschriebenen Steuerkreis beeinflußt werden.

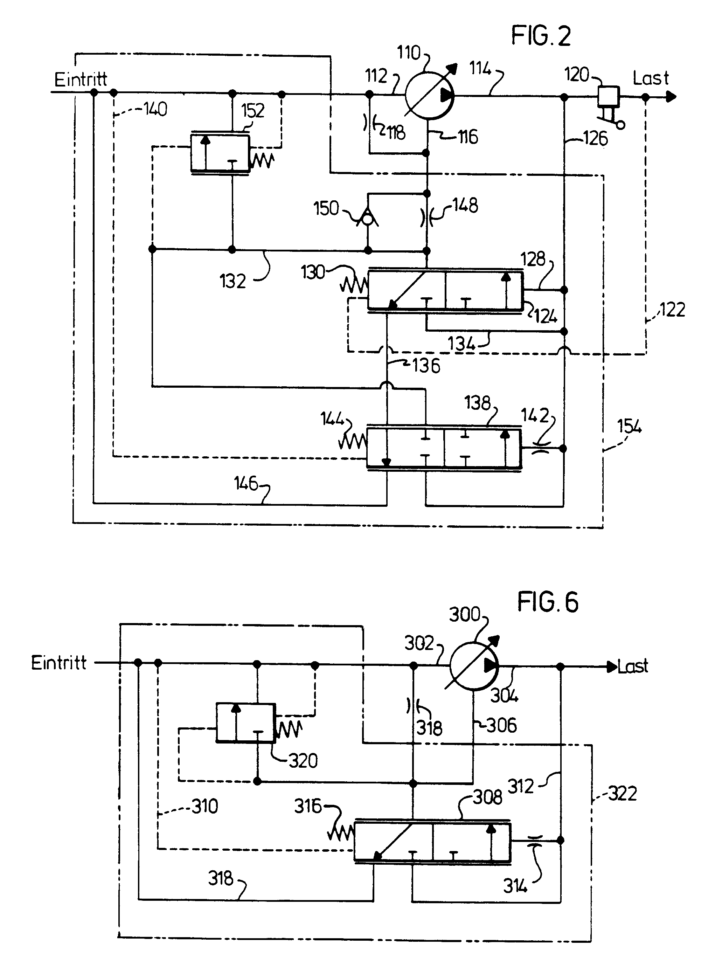

Die Fig. 2 zeigt eine Radialkolben-Verstellpumpe 110 mit einer Eintrittsleitung 112 und einer Austrittsleitung 114. Die Pumpenfördermenge wird durch den Druck an der Steueroder Kurbelwannenleitung 116 gesteuert, wobei die Fördermenge mit fallendem Druck in der Steuerleitung 116 ansteigt und umgekehrt. Einzelheiten einer solchen Pumpe können beispielsweise der US-A-3 002 462 entnommen werden.

Das Pumpengehäuse enthält normalerweise auch eine Kurbelgehäusedrosselstelle 118, welche die Steuerleitung 116 mit der Eintrittsleitung 112 verbindet. Die Hydraulikflüssigkeit neigt dazu, an dem Kolben der Pumpe vorbei in das Kurbelgehäuse durchzusickern. Die Kurbelgehäusedrosselstelle 118 ermöglicht ein Abfließen zwischen Kurbelgehäuse und Eintritt und verhindert so ein unerwünschtes Unterdrucksetzen des Kurbelgehäuses und Aussetzen des Kolbenhubes. Ein Vorteil des Steuerkreises gemäß vorliegender Erfindung ist darin zu sehen, daß die Kurbelgehäusedrosselstelle so bemessen werden kann, daß sie an erwartete Leckagen entlang des Kolbens angepaßt ist und nicht entsprechend der US-A-4 648 803 überdimensioniert zu werden braucht.

Die Austrittsleitung 114 ist über ein gewöhnliches Steuerventil 120 mit einer nicht dargestellten Last verbunden. Der Druck der Austrittsleitung 114 wird über die Leitungen 126 und 128 am einen Ende des stufenlos regelbaren, druckgesteuerten, belastungsabhängigen Dreiwege-Kolbenventils 124 angelegt.

Der erwünschte Lastdruck wird erfaßt und über eine Lastabfrageleitung 122 zurückgeführt und an das andere Ende des lastfühlenden Schieberventils 124 angelegt. Bei bevorzugten üblichen Steuerkreisen, wie sie beispielsweise in der US-A-4 463 558 dargestellt sind, wird der Druck in derartigen Lastabfrageleitungen reduziert, wenn keine Nachfrage vorliegt.

Das Schieberventil 124 ist durch eine Feder in Richtung des Endes vorgespannt, welches mit dem Austrittsdruck verbunden ist. Das Schieberventil 124 kann die Leitung 132 mit der Leitung 134 oder der Leitung 136 verbinden. Die Leitung 134 ist mit der Austrittsleitung 114 über die Leitung 126 verbunden.

Die Leitung 136 verbindet das Schieberventil 124 mit einem stufenlos regelbaren, druckgesteuerten Vierwege-Druckausgleichskolbenventil 138. Ein Ende des Druckausgleichsventils 138 wird durch den Druck der Eintrittsleitung 112 über die Leitung 140 beeinflußt, während das andere Ende durch den Druck der Austrittsleitung 114 über die Leitung 126 und die Drosselstelle 142 beeinflußt wird. Das Druckausgleichsventil 138 ist durch eine Feder 144 in Richtung der Drosselstelle 142 vorgespannt.

Das Druckausgleichsventil 138 kann wahlweise die Leitung 136 und mittels der Leitung 146 die Eintrittsleitung 112 miteinander verbinden oder unterbrechen. Ferner kann das Druckausgleichsventil 138 wahlweise die Leitungen 126 und 132 verbinden oder unterbrechen. Das Ventil 138 ist derart aufgebaut, daß dann, wenn die Leitungen 136 und 146 miteinander verbunden sind, die Leitungen 126 und 132 unterbrochen sind, während die Leitungen 126 und 132 dann miteinander verbunden sind, wenn die Leitungen 136 und 146 unterbrochen sind.

Die Leitung 132 ist über die Drosselstelle 148 und ein hierzu parallel geschaltetes Rückschlagventil 150 mit der Steuerleitung 116 verbunden. Das Rückschlagventil 150 verhindert einen Durchfluß von der Leitung 132 zur Leitung 116, während es den Durchfluß von der Leitung 116 zur Leitung 132 gestattet.

Schließlich ist ein stufenlos regelbares Kurbelgehäuse-Entlastungsventil 152 zwischen die Leitung 132 und die Eintrittsleitung 112 geschaltet. Das Entlastungsventil 152 wird durch die Druckdifferenz zwischen der Leitung 132 und der Eintrittsleitung 112 gesteuert und ist in Richtung einer geschlossenen Position vorgespannt.

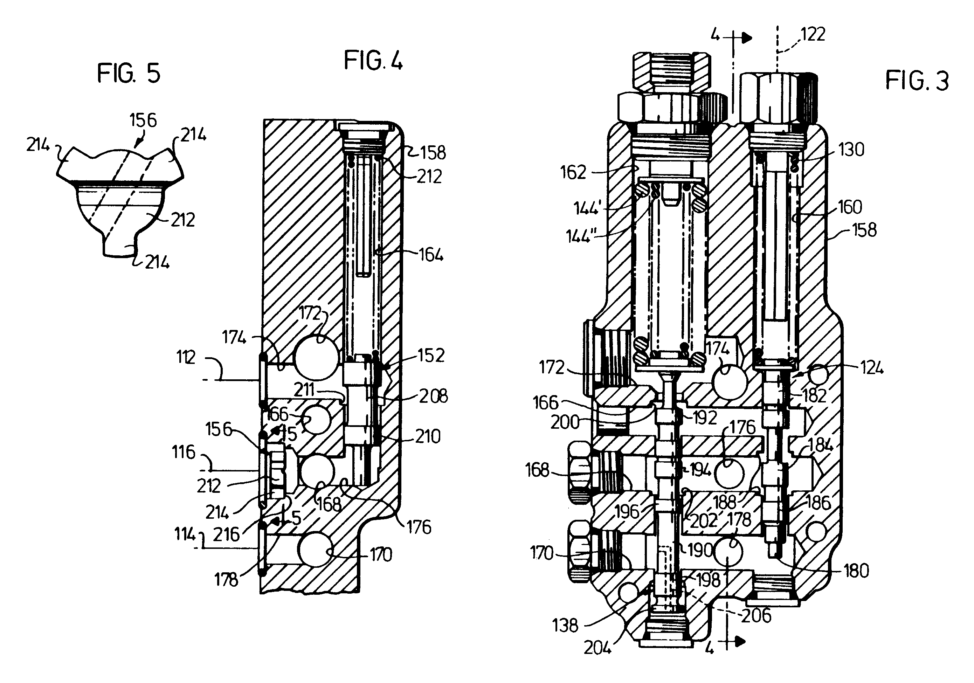

In den Figuren 3 bis 5 ist eine kompakte Ventilanordnung dargestellt, welche den Steuerkreis verkörpert, der innerhalb der strichpunktierten Linie 154 in dem Schema aus Fig. 2 entspricht. In Fig. 3 ist auf der rechten Seite ein Schieberventil dargestellt, welches dem Dreiwege-Lastfühlventil 124 entspricht. Das Schieberventil auf der linken Seite entspricht dem Vierwege-Druckkompensationsventil 138. Das in Fig. 4 dargestellte Schieberventil entspricht dem Entlastungsventil 152. Das Rückschlagdrosselventil 156, das in Fig. 4 und noch detaillierter in Fig. 5 dargestellt ist, komtiniert die Funktionen der Drosselstelle 148 und des Rückschlagventils 150 in einem Element.

Gemäß Fig. 3 und 4 enthält der Ventilkörper 158 drei mehr oder weniger parallele Bohrungen 160, 162, 164, die in einem Dreieck angeordnet sind, wobei die Bohrung 164 in etwa in der Mitte zwischen den Bohrungen 160 und 162 und benachbart zu diesen angeordnet ist. Die Bohrung 160 dient als Bohrung für das lastfühlende Ventil 124, die Bohrung 162 dient als Bohrung für das Druckausgleichsventil 138, und die Bohrung 164 dient als Bohrung für das Entlastungsventil 152. Ein Sackloch 166, eine Kurbelgehäusebohrung 168 und eine Austrittsbohrung 170 verbinden die lastfühlende Bohrung 160 mit der Druckausgleichsbohrung 162. Am besten ersichtlich sind in Fig. 4 weitere im wesentlichen senkrecht zu den vorhergenannten Bohrungen angeordnete Bohrungen. Insbesondere verbindet die Eintrittsleitungsbohrung 174 die Eintrittsbohrung 172 mit der Eintrittsleitung 112. Die Kurbelgehäuseleitungsbohrung 176 verbindet über das Rückschlagdrosselventil 156, das noch näher beschrieben werden wird, die Kurbelgehäusebohrung 168 mit der Kurbelgehäuseleitung 116. Schließlich verbindet die Austrittsleitungsbohrung 178 die Austrittsbohrung 170 mit der Austrittsleitung 114. Zusätzlich sind die Eintrittsleitungsbohrung 174 und die Kurbelgehäuseleitungsbohrung 176 jede mit der Entlastungsventilbohrung 164 verbunden.

Fig. 3 zeigt ferner einen externen Anschluß des Ventilkörpers 158, durch welchen die Lastmeldeleitung 122 mit dem Ventil 124 über das obere Ende der lastfühlenden Ventilbohrung 160 verbunden ist.

Die Lastfühlbohrung 160 enthält einen Schieber 180, welcher drei Stege 182, 184, 186 aufweist. Die äußeren Durchmesser der Stege 182, 184, 186 sind so bemessen, daß sie dichtend mit der inneren Oberfläche der Bohrung 160 in Eingriff stehen, abgesehen vom unteren Ende des Steges 186, welcher einen etwas kleineren Durchmesser als die Bohrung 160 hat. Außerdem sind Aussparungen 188 in der Bohrung 160 auf jeder Seite der Kurbelgehäusebohrung 168 vorgesehen. Der Schieber 180 ist durch eine Feder 130 so vorgespannt, daß er zu dem Boden der Bohrung 160 gedrückt wird.

Die Druckausgleichsbohrung 162 enthält ebenfalls einen Schieber 190 mit Stegen 192, 194, 196, 198. Die Stege 192, 194, 196, 198 sind so bemessen, daß sie mit der inneren Oberfläche der Bohrung 162 in Eingriff stehen, ausgenommen an Aussparungen 200, 202, welche in der Bohrung 162 unmittelbar über der Sackbohrung 166 bzw. unter der Kurbelgehäusebohrung 168 angebracht sind. Der Schieber 190 weist an seinem unteren Ende einen Anschlag 204 auf, durch den verhindert wird, daß der Schieber 190 sich zu weit nach oben bewegt. Ein schmaler Drosseldurchgang 206 verläuft in dem Schieber 190 und verbindet die Austrittsbohrung 170 mit dem unteren Ende des Schiebers 190 und dient damit derselben Funktion wie die Drosselstelle 142 in Fig. 2. Der Schieber 190 ist durch die Federn $144'$, $144''$ nach unten (gemäß Fig. 3) vorgespannt. Die Federn $144'$, $144''$ sind vorzugsweise in einer verstellbaren Art eingebaut, um eine Einstellung der Vorspannung des Schiebers 190 zu ermöglichen.

Aus Fig. 4 geht hervor, daß die Entlastungsbohrung 164 einen Schieber 208 mit einem Steg 210 enthält. Der Steg 210 steht mit dem inneren Umkreis der Bohrung 164 in Eingriff. Ausgenommen hiervon ist eine Dosieraussparung 211, die sich in der Bohrung 164 unmittelbar benachbart der Bohrung 174 befindet. Der Entlastungsschieber 208 ist durch eine Feder 212 nach unten (gemäß der Fig. 4) vorgespannt.

Gemäß den Figuren 4 und 5 wird das Rückschlagdrosselventil 156 durch einen Hauptkörper 212 gebildet, welcher hiervon abstehende Beine 214 aufweist. Wenn die Strömung zur Leitung 116 gerichtet ist, werden die Beine 214 vorgedrückt und erlauben so eine ungehinderte Strömung um ihren Rand herum. Wenn hingegen die Strömung von der Leitung 116 aus erfolgt, werden die Beine 214 gegen die Schultern 216 gedrückt, welche in der Kurbelgehäuseleitungsbohrung 176 angeformt sind, so daß der Rand gedichtet wird. Die Strömung kann dann nur zwischen den Beinen 214 und der Wandung der Bohrung 176 durchtreten, wodurch eine Blendwirkung entsteht.

Die Wirkungsweise des einer ersten Ausgestaltung der vorliegenden Erfindung entsprechenden Ventils wird im folgenden zunächst anhand der Fig. 2 und dann detaillierter anhand der Fig. 3 bis 5 beschrieben. Als Ausgangszustand soll eine hohe Volumenströmung zur Last angenommen werden, z. B. bei einer Situation, in welcher ein Hydraulikzylinder rasch ausgedehnt wird. In dieser Situation ist der Druck sowohl in der Austrittsleitung 114 als auch in der Lastmeldeleitung 122 relativ gering. Infolgedessen rührt die Hauptkraft, die auf das lastfühlende Ventil 124 wirkt, von der Feder 130 her und bewegt das Ventil 124 in eine Position, wie sie in Fig. 2 dargestellt ist. Dabei werden die Leitungen 132 und 136 miteinander verbunden. Da der Austrittsdruck niedrig ist, bewegen die vereinigten Kräfte des Druckes in der Leitung 140 und der Feder 144 das Druckausgleichsventil 138 nach rechts, wie es in Fig. 2 gezeigt ist, und verbinden dabei die Leitungen 136 und 146. Dies führt zu einem Druckrückgang im Pumpenkurbelgehäuse, da ein Abfluß durch die Kurbelgehäuseleitung 116, das Rückschlagventil 150, die Leitungen 132, 136, 146 und die Eintrittsleitung 112 stattfindet. Der Druckrückgang im Kurbelgehäuse erhöht das Hubvolumen der Pumpe, was in diesem Zustand des hohen Durchflusses erwünscht ist.

Als nächstes wird angenommen, daß der Druck bei der Last anwächst, z. B. erreicht der Hydraulikzylinder seine Endlage. Der lastfühlende Druck und kurz danach auch der Austrittsdruck steigen an. Dem Ansteigen des lastfühlenden Druckes geht ein Ansteigen des Austrittsdruckes voran, wobei in keinem Fall der Ausgangsdruck den lastfühlenden Druck übersteigt. Das lastfühlende Ventil 124 bleibt daher in seiner in Fig. 2 dargestellten Position. Im Gegensatz hierzu bewegt der steigende Austrittsdruck das Druckausgleichsventil 138 allmählich auf die linke Seite (gemäß Fig. 2). Dies beschränkt die Flüssigkeitsströmung von dem Kurbelgehäuse über die Leitung 136, während gleichzeitig eine Verbindung zwischen dem Austritt und dem Kurbelgehäuse über die Leitungen 126 und 132 geschaffen wird. Mit stetiger Verringerung der Verbindung von Leitung 136 zu Leitung 146 steigt der Rückdruck durch die Leitung 116 an, was zu einer wenigstens teilweisen Verringerung des Pumpenhubes führt.

Für den Fall, daß die Last sich nun stabilisiert hat, z. B. wenn der Hydraulikzylinder seine Bewegung beendet hat, ist die übliche Steuerkreisanordnung für die Lastmeldeleitung mit Mitteln versehen, durch die eine Reduzierung des Druckes in der Lastmeldeleitung 122 erfolgt (siehe beispielsweise die US-A-4 463 558). Der Austrittsleitungsdruck überwindet jetzt mühelos den Druck der Feder 130, wodurch das lastfühlende Ventil 124 nach links (gemäß Fig. 2) verschoben wird. Hierdurch wird der Pumpenaustritt mit der Kurbelgehäuseleitung 116 über die Leitungen 134 und 132 und die Drosselstelle 148 verbunden. Das Pumpenkurbelgehäuse füllt sich dann mit Flüssigkeit, was dazu führt, daß die Unterdrückung des Pumpenhubes abgeschlossen wird. Diese Position ist stabil, da die Pumpe gerade den Ausgangsdruck, welcher erforderlich ist, um die Feder 130 zu überwinden, aufrechterhält.

Im folgenden wird angegeben, daß eine neue Lastanfrage auftritt. Der Austrittsdruck fällt wieder ab, so daß die Feder 130 das Ventil 124 zur rechten Seite (gemäß Fig. 2) bewegt. Entsprechend erlaubt der Druckabfall durch die Drosselstelle 142, daß das Ventil 138 sich nach rechts (gemäß Fig. 2) bewegt, so daß die Pumpe wieder einen vergrößerten Hub ausführen kann und der Kreis geschlossen ist.

In dem soeben beschriebenen Kreis tritt eine hohe Druckspitze in der Leitung 132 auf, sofern zu irgendeiner Zeit der lastfühlende Druck und/oder der Austrittsdruck rasch ansteigt, z. B. infolge einer Bewegung eines Hydraulikzylinders mit voll geöffneten Ventilen oder bei plötzlichem Anhalten in der Endlage. Früher konnte diese hohe Druckspitze nur durch eine Kurbelgehäusedrosselstelle 118 abgeleitet werden, welche große Durchmesser für die Kurbelgehäusedrosselstelle 118 erforderlich machte. Die vorliegende Erfindung überwindet diese verschwenderische Bemessung, indem sie ein Entlastungsventil 152 bereitstellt. Mit diesem Ventil 152 kann der Druck in der Leitung 132, sofern er über ein erwunschtes Maximum hinaus ansteigt, rasch in die Eintrittsleitung 112 entspannt werden.

Bezugnehmend auf Fig. 3 und 4 ist der Druck in der Eintrittsbohrung 172 der gleiche wie der Druck in der Eintrittsleitung 112, welche miteinander verbunden sind. Entsprechend ist der Druck in der Kurbelgehäusebohrung 168 derselbe wie der Druck in der Kurbelgehäuseleitung 116, und der Druck in der Austrittsbohrung 170 ist derselbe wie der Druck in der Austrittsleitung 114. Der lastfühlende Druck ist von der Leitung 122 aus unmittelbar an das obere Ende des Schiebers 180 angelegt. Der Austrittsdruck ist unmittelbar an die Austrittsbohrung 170 und damit an das untere Ende des Schiebers 180 angelegt. Der Eintrittsdruck ist an das obere Ende des Schiebers 190 an die Eintrittsbohrung 172 angelegt, während der Austrittsdruck an das untere Ende des Schiebers 190 über den schmalen Drosseldurchgang 206 angelegt ist. Die erwünschte Dosierung, die erforderlich ist, um ein stufenlos verstellbares Ventil hervorzubringen, wird durch die Aussparungen in den entsprechenden Stegen und Steuerschieberbohrungen erreicht.

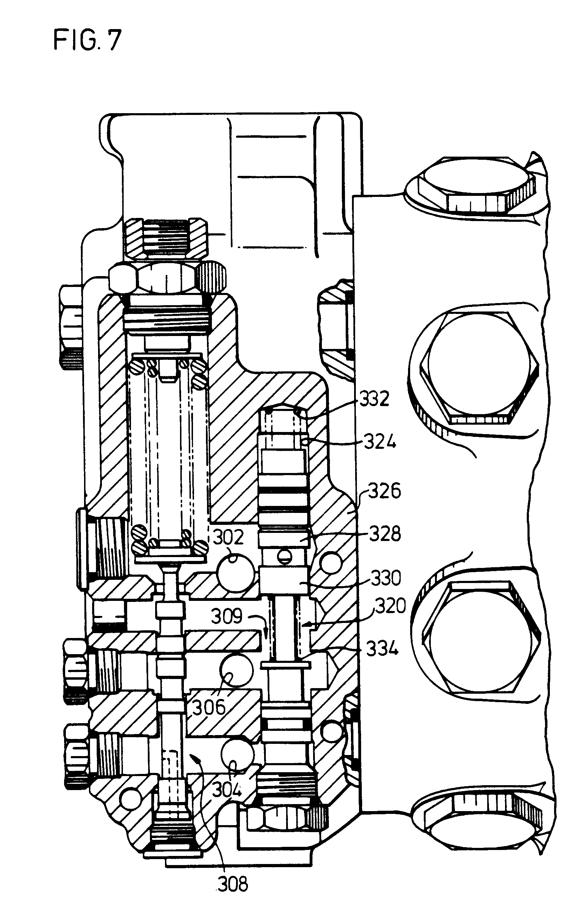

Fig. 6 stellt eine alternative Ausführungsform eines erfindungsgemäßen Steuerkreises dar. Eine Radialkolben-Verstellpumpe 300 hat eine Eintrittsleitung 302, eine Austrittsleitung 304 und eine Kurbelgehäuseleitung 306. Die Pumpe 300 ist mit einem Steuerkreis ausgerüstet, welcher ein stufenlos verstellbares, hilfsgesteuertes, druckkompensierendes Dreiwege-Schieberventil 308 enthält. Der Druck in der Eintrittsleitung 302 ist an ein Ende des druckkompensierenden Ventils 308 über die Leitung 310 angelegt, während der Druck der Austrittsleitung 304 an das andere Ende des Ventils 308 über die Leitung 312 und die Drosselstelle 314 angelegt ist. Das Ventil 308 ist durch eine Feder 316 zur Drosselstelle 314 hin vorgespannt. Das Ventil 308 kann die Kurbelgehäuseleitung 306 wahlweise entweder mit dem Eintritt 302 über die Leitung 318 oder mit dem Austritt 304 über die Leitung 312 verbinden.

Die Kurbelgehäuseleitung 306 ist über die Drosselstelle 318 und das Überdruckventil 320 auch mit der Eintrittsleitung 302 verbunden. Das Überdruckventil 320 ist normalerweise so vorgespannt, daß es verschlossen ist. Es wird durch den Differenzdruck zwischen der Kurbelgehäuseleitung 306 und der Eintrittsleitung 302 beeinflußt. Durch die Verwendung des Überdruckventils 320 kann die Kurbelgehäusedrosselstelle 318 wesentlich kleiner bemessen werden, als dies in konventionellen Kreisen möglich war.

Fig. 7 stellt einen kompakten Ventilkörper dar, welcher den Teil des Kreises verkörpert, der durch die strichpunktierte Linie 322 in Fig. 6 umrissen ist. Wie Fig. 7 zeigt, ist das rechte Schieberventil das Überdruckventil 320, während das linke Schieberventil das Steuerventil 308 ist. Das Ventil 308 ist im wesentlichen identisch mit dem Ventil 138, welches in Fig. 3 dargestellt wurde. Es wird hier daher nicht mehr näher beschrieben, es soll lediglich erwähnt werden, daß die Öffnung 309 das Ventil tatsächlich eher in ein Dreiwege- als in ein Vierwege-Ventil umwandelt. Das Überdruckventil 320 wird durch eine Ventilbohrung 324 gebildet, welche sich im Ventilkörper 326 befindet und einen Ventilschieber 328 aufnimmt. Der Ventilschieber 328 weist angeformte Stege 330 auf, die mit der inneren Oberfläche der Ventilbohrung 324 in Eingriff stehen. Die obere Seite des Steges 330 ist dem Eintrittsdruck ausgesetzt, während die untere Seite des Steges 330 dem Kurbelgehäusedruck ausgesetzt ist. Die Federn 332, 334 positionieren gemeinsam den Steg 330 ungefähr in eine Lage, wie sie dargestellt wurde. Es ist ersichtlich, daß bei großer Erhöhung des Druckes in der Kurbelgehäuseleitung 306 die Stege 330 hochgedrückt werden (gemäß Fig. 7). Hierbei wird die Ventilbohrung 324 geöffnet und ein Flüssigkeitsstrom von der Kurbelgehäuseleitung 306 zur Eintrittsleitung 302 zugelassen. Aus Fig. 6 geht hervor, daß beim Betrieb ein hoher Fluß zur Last einen geringen Druck in der Austrittsleitung 304 erzeugt, was zur Folge hat, daß die Feder 316 das Ventil 308 nach rechts verschiebt, wie es in Fig. 6 dargestellt ist. Hierdurch wird die Kurbelgehäuseleitung 306 über die Leitung 318 mit dem Eintritt 302 verbunden, wodurch die Pumpe 300 einen vollen Hub erhält. Mit steigendem Austrittsdruck verschiebt sich das Ventil 308 nach links. Der Pumpenhub wird vermindert. Wenn der Austrittsdruck zu stark zunimmt, öffnet das Überdruckventil 320 und verbindet die Kurbelgehäuseleitung 306 mit der Eintrittsleitung 302.

**Patentansprüche**

1. Steuerkreis für ein hydraulisches Verstellglied (10, 110), welches durch einen über eine Steuerleitung (44, 116) zuführbaren Druck einstellbar ist, mit Ventilmitteln (26, 124, 138), die durch eine Druckdifferenz zwischen dem Austrittsdruck des Verstellgliedes (10, 110) und dem durch eine Signalleitung (24, 122) zugeführten, einer gewünschten Lastanforderung an das Verstellglied (10, 110) entsprechenden Druck derart betätigbar sind, daß bei ausreichender Druckdifferenz die Ventilmittel (26, 124, 138) eine zweite Ventilposition einnehmen, bei der zwischen Steuerleitung (44, 116) und dem Austritt (18) des Verstellgliedes (10, 110) eine Verbindung existiert, und mit Mitteln, durch die die Steuerleitung (44, 116) mit dem Eintritt des Verstellgliedes (10, 110) verbindbar ist, dadurch gekennzeichnet, daß in eine Verbindungsleitung (30) zwischen Ventilmitteln (26, 124, 138) und Steuerleitung (44, 116) erste Durchflußbegrenzungsmittel (38, 148) eingefügt sind, daß zwischen den Ventilmitteln (26, 124, 138) und dem Eintritt (12) des Verstellgliedes (10, 110) Überdruckmittel (46, 152) angeordnet sind, die einen Durchfluß von der Seite der Ventilmittel (26, 124, 138) zu dem Eintritt (12) des Verstellgliedes (10, 110) dann erlauben, wenn der Druck auf der Seite der Ventilmittel (26, 124, 138) einen vorgebbaren Wert übersteigt, und daß parallel zu den ersten Durchflußbegrenzungsmitteln (38, 148) ein Einwegdurchflußmittel (48, 150) angeordnet ist, durch welches ein Durchfluß von der Steuerleitung (44, 116) zu den Ventilmitteln (26, 124) erfolgen kann, wenn eine ausreichend hohe Druckdifferenz über dem Einwegdurchflußmittel (48, 150) liegt.

2. Steuerkreis für ein hydraulisches Verstellglied (10, 110), welches durch einen über eine Steuerleitung (44, 116) zuführbaren Druck einstellbar ist, mit Ventilmitteln (26, 124, 138), die durch eine Druckdifferenz zwischen dem Austrittsdruck des Verstellgliedes (10, 110) und dem durch eine Signalleitung (24, 122) zugeführten, einer gewünschten Lastanforderung an das Verstellglied (10, 110) entsprechenden Druck derart betätigbar sind, daß bei ausreichender Druckdifferenz die Ventilmittel (26, 124, 138) eine zweite Ventilposition einnehmen, bei der zwischen Steuerleitung (44, 116) und dem Austritt (18) des Verstellgliedes (10, 110) eine Verbindung existiert, und mit Mitteln, durch die die Steuerleitung (44, 116) mit dem Eintritt des Verstellgliedes (10, 110) verbindbar ist, dadurch gekennzeichnet, daß in eine Verbindungsleitung (30) zwischen Ventilmitteln (26, 124, 138) und Steuerleitung (44, 116) erste Durchflußbegrenzungsmittel (38, 148) eingefügt sind, daß in eine Verbindungsleitung zwischen Steuerleitung (44, 116) und Pumpeneintritt (12) wenigstens ein weiteres zweites Durchflußbegrenzungsmittel (40, 118) eingefügt ist, und daß zwischen den Ventilmitteln (26, 124, 138) und dem Eintritt (12) des Verstellgliedes (10, 110) Überdruckmittel (46, 152) angeordnet sind, die einen Durchfluß von der Seite der Ventilmittel (26, 124, 138) zu dem Eintritt (12) des Verstellgliedes (10, 110) dann erlauben, wenn der Druck auf der Seite der Ventilmittel (26, 124, 138) einen vorgebbaren Wert übersteigt.

3. Steuerkreis nach Anspruch 2, dadurch gekennzeichnet, daß parallel zu den ersten Durchflußbegrenzungsmitteln (38, 148) ein Einwegdurchflußmittel (48, 150) angeordnet ist, durch welches ein Durchfluß von der Steuerleitung (44, 116) zu den Ventilmitteln (26 124) erfolgen kann, wenn eine ausreichend hohe Druckdifferenz über dem Einwegdurchflußmittel (48, 150) liegt.

4. Steuerkreis nach einem der Ansprüche 1 bis 3, dadurch gekennzeichnet, daß die Ventilmittel (26, 124, 138) eine erste Ventilposition aufweisen, in der sie die Steuerleitung (44, 116) mit dem Pumpeneintritt (12) verbinden.

5. Steuerkreis nach einem der Ansprüche 1 bis 4, dadurch gekennzeichnet, daß die Druckminderungsmittel (46) so angeordnet sind, daß sie parallel zum ersten Durchflußbegrenzungsmittel (38) liegen.

6. Steuerkreis nach einem der Ansprüche 1 bis 5, dadurch gekennzeichnet, daß die Ventilmittel (26, 124, 138) in Richtung der ersten Ventilposition vorgespannt sind.

7. Steuerkreis nach einem der Ansprüche 1 bis 6, dadurch gekennzeichnet, daß das hydraulische Verstellglied (10, 110) der Gruppe der Ventile und Verstellpumpen angehört.

8. Steuerkreis nach einem der Ansprüche 1 bis 7, dadurch gekennzeichnet, daß das hydraulische Verstellglied (10, 110) eine Radialkolben-Verstellpumpe ist, bei der die Fördermenge mit fallendem Druck in der Steuerleitung (44, 116) ansteigt und mit steigendem Druck in der Steuerleitung (44, 116) fällt.

9. Steuerkreis nach einem der Ansprüche 1 bis 8, dadurch gekennzeichnet, daß das Einwegdurchflußmittel (48, 150) ein Rückschlagventil enthält.

10. Steuerkreis nach einem der Ansprüche 1 bis 9, dadurch gekennzeichnet, daß die ersten und/oder das zweite Durchflußbegrenzungsmittel (38, 40) eine Drosselstelle enthalten.

11. Steuerkreis nach einem der Ansprüche 1 bis 10, dadurch gekennzeichnet, daß das Einwegdurchflußmittel (48) einen kennzeichnenden Durchfluß zuläßt, der um etwa eine Größenordnung über dem kennzeichnenden Durchfluß einer der beiden Durchflußbegrenzungsmittel (38, 40) und besagtem Druckminderungsmittel (46) liegt.

12. Steuerkreis nach Anspruch 11, dadurch gekennzeichnet, daß das erste Durchflußbegrenzungsmittel (38) einen Durchfluß von etwa 0,04 l pro Sekunde, das Einwegdurchflußmittel (48) einen Durchfluß von etwa 0,2 l pro Sekunde und das Druckminderungsmittel (46) einen Durchfluß von etwa 0,03 l pro Sekunde erlaubt.

13. Steuerkreis nach einem der Ansprüche 11 oder 12, dadurch gekennzeichnet, daß die ersten Durchflußbegrenzungsmittel (38) eine Drosselstelle mit einem Durchmesser von etwa 2,5 mm und das zweite Durchflußbegrenzungsmittel (40) eine Drosselstelle mit einem Durchmesser von etwa 1,5 mm enthalten.

14. Steuerkreis nach einem der Ansprüche 2 bis 12, dadurch gekennzeichnet, daß die ersten Durchflußbegrenzungsmittel (38) eine Drosselstelle mit einem Durchmesser von etwa 3,0 mm und das zweite Durchflußbegrenzungsmittel (40) eine Drosselstelle mit einem Durchmesser von etwa 2,5 mm enthalten und daß die maximale Durchflußmenge durch das erste und zweite Durchflußbegrenzungsmittel 0,13 l pro Sekunde beträgt.

15. Steuerkreis nach einem der Ansprüche 1 bis 14, dadurch gekennzeichnet,
a) daß die Ventilmittel (26) ein lastfühlendes DreiwegeSteuerventil (124) und ein Vierwege-Druckausgleichsventil (138) enthalten, welche jeweils durch die Druckdifferenz zweier angelegter Drücke wahlweise zwischen zwei Stellungen steuerbar sind, daß das lastfühlende Steuerventil (124) mit einem ersten Anschluß an die Steuerleitung (116), mit einem zweiten Anschluß an den Pumpeneintritt (112) und mit einem dritten Anschluß an den Pumpenaustritt (114) anschließbar ist und durch die Druckdifferenz des Pumpenaustrittsdruckes und des Druckes der lastmeldenden Steuerleitung (122) steuerbar ist, wobei das Steuerventil in einer ersten Position seinen ersten Anschluß mit seinem zweiten Anschluß verbindet und in einer zweiten Position seinen ersten Anschluß mit seinem dritten Anschluß verbindet, daß das Druckausgleichsventil (138) mit einem ersten Anschluß an den zweiten Anschluß des lastfühlenden Steuerventils (124), mit einem zweiten Anschluß an den ersten Anschluß des Steuerventils (124), mit einem dritten Anschluß an den Pumpeneintritt und mit einem vierten Anschluß an den Pumpenaustritt anschließbar ist und durch die Druckdifferenz des Pumpeneintrittsdruckes und des Pumpenaustrittsdruckes steuerbar ist, wobei das Druckausgleichsventil (138) in einer ersten Position seinen ersten und dritten Anschluß miteinander verbindet und eine Verbindung zwischen seinem zweiten und vierten Anschluß blockiert, während es in einer zweiten Position den zweiten und vierten Anschluß miteinander verbindet und eine Verbindung zwischen dem ersten und dritten Anschluß blockiert,

b) daß die ersten Durchflußbegrenzungsmittel (38) Drosselmittel (148) sind, welche in einer Verbindungsleitung zwischen der Steuerleitung (116) und dem ersten Anschluß des lastfühlenden Steuerventils (124) angeordnet sind,

c) daß das Durchflußdrosselmittel (148) die Pumpensteuerleitung (116) mit dem ersten Anschluß des lastfühlenden Schieberventils (124) verbindet,

d) daß die Einweg-Durchflußmittel (48) ein Rückschlagventil (150) enthalten, welches parallel zu den Drosselmitteln (148) geschaltet ist und einen Durchfluß von der Pumpensteuerleitung (116) zum ersten Anschluß des lastfühlenden Steuerventils (124) erlaubt, nicht aber umgekehrt,

e) und daß die Druckminderungsmittel (46) ein Entlastungsventil (152) enthalten, welches den ersten Anschluß des lastfühlenden Steuerventils (124) mit dem Pumpeneintritt verbindet, sofern die Druckdifferenz zwischen beiden einen vorbestimmbaren Wert übersteigt.

16. Steuerkreis nach Anspruch 15, dadurch gekennzeichnet, daß die genannten Ventile stufenlos steuerbar sind.

17. Steuerkreis nach Anspruch 15 oder 16, dadurch gekennzeichnet, daß jedes der genannten Ventile ein pilotgesteuertes Schieberventil ist.

18. Steuerkreis nach einem der Ansprüche 15 bis 17, dadurch gekennzeichnet, daß das hydraulische Verstellglied (10) eine Radialkolbenpumpe (110) ist und der Steuerkreis weitere zweite Durchflußbegrenzungsmittel (118) aufweist, die den Pumpeneintritt mit der Steuerleitung (116) verbinden.

19. Steuerkreis nach einem der Ansprüche 15 bis 18, dadurch gekennzeichnet, daß weitere Durchflußbegrenzungsmittel (142) enthalten sind, die die Ansprechgeschwindigkeit der Steuermittel des Druckausgleichsventils (138) herabsetzen.

20. Steuerventil für eine Verstellpumpe zur Verwendung in einem Steuerkreis nach einem der Ansprüche 15 bis 19, dadurch gekennzeichnet, daß das Steuerventil einen Ventilkörper mit einer ersten, zweiten und dritten Steuerschieberbohrung (160, 162, 164) enthält, wobei ein Ende der ersten Steuerschieberbohrung (160) mit der Signalleitung (122) verbindbar ist, daß eine erste, zweite und dritte Querbohrung (166, 168, 170) die erste und zweite Steuerschieberbohrung (160, 162) miteinander verbinden und die dritte Querbohrung (170) mit dem Pumpenaustritt verbindbar ist, daß eine vierte Querbohrung (172) mit der zweiten Steuerschieberbohrung (162) verbunden ist, daß eine fünfte Querbohrung (174) die vierte Querbohrung mit der dritten Steuerschieberbohrung (164) und dem Pumpeneintritt verbindet, daß eine sechste Querbohrung (176) die zweite Querbohrung (168) mit der dritten Steuerschieberbohrung (164) und der Steuerleitung (116) verbindet, daß ein lastfühlender Steuerschieber (180) in der ersten Steuerschieberbohrung (160) angeordnet ist, an welchen ein erster und zweiter Steg (184, 186) angeformt sind, wobei der erste Steg (184) dazu dient, wahlweise die erste Steuerschieberbohrung (160) im Bereich zwischen der ersten und zweiten Querbohrung (166, 168) wenigstens teilweise zu verschließen, und der zweite Steg (186) dazu dient, wahlweise die erste Steuerschieberbohrung (160) im Bereich zwischen der zweiten und dritten Querbohrung (168, 170) wenigstens teilweise zu verschließen, daß ein Ende des lastfühlenden Steuerschiebers (180) dem Druck der Signalleitung (122) und das andere Ende des lastfühlenden Steuerschiebers (180) dem Druck des Pumpenaustrittes ausgesetzt sind, daß ein druckausgleichender Steuerschieber (190) in der zweiten Steuerschieberbohrung (162) angeordnet ist, an welchem ein erster, zweiter und dritter Steg (192, 194, 196) angeformt sind, wobei der erste Steg (192) dazu dient, wahlweise die zweite Steuerschieberbohrung (162) im Bereich zwischen der vierten und ersten Querbohrung (172, 166) wenigstens teilweise zu verschließen, der zweite Steg (194) dazu dient, wahlweise die zweite Steuerschieberbohrung (162) im Bereich zwischen der ersten und zweiten Querbohrung (166, 168) zu verschließen, und der dritte Steg (196) dazu dient, wahlweise die zweite Steuerschieberbohrung (162) im Bereich zwischen der zweiten und dritten Querbohrung (168, 170) zu verschließen, daß ein Ende des druckausgleichenden Steuerschiebers (190) dem Druck des Pumpeneintrittes und das andere Ende des druckausgleichenden Steuerschiebers (190) dem Druck des Pumpenaustrittes ausgesetzt ist, daß ein Entlastungsschieber (208) in der dritten Steuerschieberbohrung (164) angeordnet ist, an welchem ein Steg (210) angeformt ist, welcher dazu dient, wahlweise die dritte Steuerschieberbohrung (164) im Bereich zwischen der fünften und sechsten Querbohrung (174, 176) wenigstens teilweise zu verschließen, daß Rückschlagdrosselmittel in der sechsten Bohrung (176) angeordnet sind, die eine ungehinderte Strömung von der Steuerleitung (116) zur zweiten Querbohrung (168) erlauben, jedoch bei Strömung in umgekehrter Richtung den Durchfluß begrenzen.

21. Steuerventil nach Anspruch 20, dadurch gekennzeichnet, daß durch eine siebte Querbohrung (178) die dritte Querbohrung (170) mit dem Pumpenaustritt verbindbar ist.

22. Steuerventil nach Anspruch 20 oder 21, dadurch gekennzeichnet, daß der druckausgleichende Steuerschieber (190) einen Durchfluß begrenzenden Durchgang (206) aufweist, durch den der Druck des Pumpenaustrittes von der dritten Querbohrung (170) zum benachbarten Ende des druckausgleichenden Steuerschiebers (190) geführt wird.

23. Steuerventil nach einem der Ansprüche 20 bis 22, dadurch gekennzeichnet, daß die Rückschlagdrosselmittel einen Vielbeinkörper (212) enthalten, der zwischen einer Position, die freien Durchfluß durch die sechste Querbohrung (176) zuläßt, und einer Position, die lediglich einen begrenzten Durchfluß zwischen den Beinen des Vielbeinkörpers und der sechsten Querbohrung (176) zuläßt, bewegbar ist.

24. Steuerventil nach einem der Ansprüche 20 bis 23, dadurch gekennzeichnet, daß jede Steuerschieberbohrung (160, 162, 164) Federmittel enthält, durch die die entsprechenden Steuerschieber (180, 190, 208) unter Vorspannung gesetzt werden.

25. Steuerventil nach Anspruch 24, dadurch gekennzeichnet, daß die Federmittel in der zweiten Steuerschieberbohrung (162) verstellbar sind.

26. Steuerventil für eine Verstellpumpe zur Verwendung in einem Steuerkreis für eine hydraulische Verstellpumpe (300), welche durch einen über eine Steuerleitung (306), zuführbaren Druck einstellbar ist, mit einem Steuerventil (308), welches durch die Druckdifferenz zwischen dem Austrittsdruck und dem Eintrittsdruck der Verstellpumpe (300) betätigbar ist, wobei das Steuerventil (308) einen ersten Anschluß, der mit der Pumpensteuerleitung (306), einen zweiten Anschluß, der mit dem Pumpeneintritt, und einen dritten Anschluß, der mit dem Pumpenaustritt verbindbar ist, aufweist, wobei ferner das Steuerventil (308) in einer ersten Position den ersten mit dem zweiten Anschluß verbindet und in einer anderen Position den ersten mit dem dritten Anschluß verbindet, und mit einem Überdruckmittel (320), durch das eine Verbindung zwischen dem ersten Anschluß und dem Pumpeneintritt dann geschaffen wird, wenn die Druckdifferenz zwischen dem ersten Anschluß und dem Pumpeneintritt einen vorherbestimmbaren Wert übersteigt, dadurch gekennzeichnet, daß das Steuerventil einen Ventilkörper (326) mit einer ersten und zweiten Steuerschieberbohrung und einer ersten, zweiten, dritten und vierten Querbohrung enthält, daß die Steuerschieberbohrungen durch die erste, zweite und dritte Querbohrung miteinander verbunden sind, daß die erste Querbohrung mit dem Pumpeneintritt und die dritte Querbohrung mit der Pumpensteuerleitung (306) und die vierte Querbohrung sowohl mit dem Pumpenaustritt als auch der ersten Steuerschieberbohrung verbunden ist, daß ein druckausgleichender Steuerschieber in der ersten Steuerschieberbohrung angeordnet ist und einen ersten, zweiten und dritten Steg aufweist, wobei der erste Steg dazu dient, wahlweise die erste Steuerschieberbohrung im Bereich zwischen der ersten und zweiten Querbohrung wenigstens teilweise zu verschließen, der zweite Steg dazu dient, wahlweise die erste Steuerschieberbohrung im Bereich zwischen der zweiten und dritten Querbohrung wenigstens teilweise zu verschließen, und der dritte Steg dazu dient, wahlweise die erste Steuerschieberbohrung im Bereich zwischen der dritten und vierten Querbohrung wenigstens teilweise zu verschließen, daß die Enden des druckausgleichenden Steuerschiebers dem Druck des Pumpeneintrittes bzw. dem des Pumpenaustrittes ausgesetzt sind und daß ein Entlastungsschieber (328) in der zweiten Steuerschieberbohrung (324) angeordnet ist, an welchem ein Steg (330) angeformt ist, der dazu dient, wahlweise die zweite Steuerschieberbohrung (324) im Bereich zwischen der ersten und zweiten Querbohrung wenigstens teilweise zu verschließen.

27. Steuerventil nach Anspruch 26, dadurch gekennzeichnet, daß der Ventilkörper (326) ferner eine fünfte, sechste und siebte Querbohrung enthält, welche die Verbindungen zwischen der ersten, dritten und vierten Querbohrung und dem Pumpeneintritt, der Steuerleitung (306) bzw. dem Pumpenaustritt herstellen.

28. Steuerventil nach Anspruch 26 oder 27, dadurch gekennzeichnet, daß der druckausgleichende Steuerschieber einen Durchfluß begrenzenden Durchgang aufweist, durch den der Druck des Pumpenaustrittes von der vierten Querbohrung zum benachbarten Ende des druckausgleichenden Steuerschiebers geführt wird.

29. Steuerventil nach einem der Ansprüche 26 bis 28, dadurch gekennzeichnet, daß jede Steuerschieberbohrung Federmittel enthält, durch die die entsprechenden Steuerschieber unter Vorspannung gesetzt werden.

30. Steuerventil nach Anspruch 29, dadurch gekennzeichnet, daß die Federmittel in der ersten Steuerschieberbohrung verstellbar sind.

**Claims**

1. Control circuit for a hydraulic adjusting unit (10, 110) adjustable by a pressure which can be supplied by way of a control line (44, 116), with valve means (26, 124, 138) which can be actuated in such manner by a difference between the outlet pressure of the adjusting unit (10, 110) and the pressure supplied by a signal line (24, 122) and corresponding to a desired load demand on the adjusting unit (10, 110) that, with a sufficient difference in pressure, the valve means (26, 124, 138) adopt a second position in which a connection exists between the control line (44, 116) and the outlet (18) of the adjusting unit (10, 110), and with means by which the control line (44, 116) can be connected with the inlet of the adjusting unit (10, 110), characterised in that first flow limiting means (38, 148) are inserted in a connecting line (30) between the valve means (26, 124, 138) and the control line (44, 116), excess pressure means (46, 152) are arranged between the valve means (26, 124, 138) and the inlet (12) of the adjusting unit (10, 110) and allow a flow from the side of the valve means (26, 124, 138) to the inlet (12) of the adjusting unit (10, 110) when the pressure on the side of the valve means (26, 124, 138) exceeds a prescribable value, and in parallel with the first flow limiting means (38, 148) there is arranged a one-way flow means (48, 150) through which a flow can take place from the control line (44, 116) to the valve means (26, 124) when there is a sufficiently high pressure difference across the one-way flow means (48, 150).

2. Control circuit for a hydraulic adjusting unit (10, 110) adjustable by a pressure which can be supplied by way of a control line (44, 116), with valve means (26, 124, 138) which can be actuated in such manner by a difference between the outlet pressure of the adjusting unit (10, 110) and the pressure supplied by a signal line (24, 122) and corresponding to a desired load demand on the adjusting unit (10, 110) that, with a sufficient difference in pressure, the valve means (26, 124, 138) adopt a second position in which a connection exists between the control line (44, 116) and the outlet (18) of the adjusting unit (10, 110), and with means by which the control line (44, 116) can be connected with the inlet of the adjusting unit (10, 110), characterised in that first flow limiting means (38, 148) are inserted in a connecting line (30) between the valve means (26, 124, 138) and the control line (44, 116), at least another, second, flow limiting means (40, 118) is inserted in a connecting line between the control line (44, 116) and the pump inlet (12), and excess pressure means (46, 152) are arranged between the valve means (26, 124, 138) and the inlet (12) of the adjusting unit (10, 110) and allow a flow from the side of the valve means (26, 124, 138) to the inlet (12) of the adjusting unit (10, 110) when the pressure on the side of the valve means (26, 124, 138) exceeds a prescribable value.

3. Control circuit according to claim 2, characterised in that in parallel with the first flow limiting means (38, 148) there is arranged a one-way flow means (48, 150) through which a flow can take place from the control line (44, 116) to the valve means (26, 124) when there is a sufficiently high pressure difference across the one-way flow means (48, 150).

4. Control circuit according to any one of claims 1 to 3, characterised in that the valve means (26, 124, 138) have a first position in which they connect the control line (44, 116) with the pump inlet (12).

**5.** Control circuit according to any one of claims 1 to 4, characterised in that the pressure reducing means (46) are so arranged that they are disposed in parallel with the first flow limiting means (38).

**6.** Control circuit according to any one of claims 1 to 5, characterised in that the valve means (26, 124, 138) are biased towards the first valve position.

**7.** Control circuit according to any one of claims 1 to 6, characterised in that the hydraulic adjusting unit (10, 110) belongs to the group of the valves and adjusting pumps.

**8.** Control circuit according to any one of claims 1 to 7, characterised in that the hydraulic adjusting unit (10, 110) is a radial piston adjusting pump in which the delivery increases with decreasing pressure in the control line (44, 116) and decreases with increasing pressure in the control line (44, 116).

**9.** Control circuit according to any one of claims 1 to 8, characterised in that the one-way flow means (48, 150) comprises a check valve.

**10.** Control circuit according to any one of claims 1 to 9, characterised in that the first and/or the second flow limiting means (38, 40) comprise a throttling point.

**11.** Control circuit according to any one of claims 1 to 10, characterised in that the one-way flow means (48) allows a specific flow which is about one order of magnitude above the specific flow of one of the two flow limiting means (38, 40) and the said pressure reducing means (46).

**12.** Control circuit according to claim 11, characterised in that the first flow limiting means (38) allows a flow of about 0.04 l per second, the one-way flow means (48) allows a flow of about 0.2 l per second and the pressure reducing means (46) allows a flow of about 0.03 l per second.

**13.** Control circuit according to either of claims 11 and 12, characterised in that the first flow limiting means (38) comprises a throttling point with a diameter of about 2.5 mm and the second flow limiting means (40) comprises a throttling point with a diameter of about 1.5 mm.

**14.** Control circuit according to any one of claims 2 to 12, characterised in that the first flow limiting means (38) comprises a throttling point with a diameter of about 3.0 mm and the second flow limiting means (40) comprises a throttling point with a diameter of about 2.5 mm, and the maximum rate of flow through the first and second flow limiting means is 0.13 l per second.

**15.** Control circuit according to any one of claims 1 to 14, characterised in that

a) the valve means (26) comprise a load-sensing three-way control valve (124) and a four-way pressure equalizing valve (138) which are each selectively controllable between two positions by the difference in two applied pressures, the load-sensing control valve (124) can be connected to the control line (116) by a first connection, to the pump inlet (112) by a second connection and to the pump outlet (114) by a third connection and is controllable by the difference in the pump outlet pressure and the pressure of the load-signalling control line (122), the control valve, in a first position, connecting its first connection with its second connection and connecting, in a second position, its first connection with its third connection, the pressure equalizing valve (138) is connectable by a first connection to the second connection of the load-sensing control valve (124), by a second connection to the first connection of the control valve (124), by a third connection to the pump inlet and by a fourth connection to the pump outlet and is controllable by the difference in the pump inlet pressure and the pump outlet pressure, the pressure equalizing valve (138) connecting its first and third connections with one another in a first position and blocking any connection between its second and fourth connections, while in a second position it connects the second and fourth connections with one another and blocks any connection between the first and third connections,

b) the first flow limiting means (38) are throttling means (148) which are arranged in a connecting line between the control line (116) and the first connection of the load-sensing control valve (124),

c) the flow throttling means (148) connects the pump control line (116) with the first connection of the load-sensing slide valve (124),

d) the one-way flow means (48) comprise a check valve (150) which is connected in parallel with the throttling means (148) and allows a flow from the pump control line (116) to the first connection of the load-sensing control valve (124), but not in the opposite direction,

e) and the pressure reducing means (46) comprise a pressure relieving valve (152) which connects the first connection of the load-sensing control valve (124) with the pump inlet, if the pressure difference between the two exceeds a predeterminable value.

16. Control circuit according to claim 15, characterised in that the said valves are controllable in an infinitely variable manner.

17. Control circuit according to claim 15 or 16, characterised in that each of the said valves is a pilot-controlled slide valve.

18. Control circuit according to any one of claims 15 to 17, characterised in that the hydraulic adjusting unit (10) is a radial piston pump (110) and the control circuit has additional, second, flow limiting means (118) which connect the pump inlet with the control line (116).

19. Control circuit according to any one of claims 15 to 18, characterised in that additional flow limiting means (142) are present which lower the speed of response of the control means of the pressure equalizing valve (138).

20. Control valve for an adjusting pump for use in a control circuit according to any one of claims 15 to 19, characterised in that the control valve comprises a valve body with a first, a second and a third control slide valve bore (160, 162, 164), one end of the first control slide valve bore (160) being connectable with the signal line (122), a first, a second and a third transverse bore (166, 168, 170) connect the first and second control slide valve bores (160, 162) with one another and the third transverse bore (170) is connectable with the pump outlet, a fourth transverse bore (172) is connected to the second control slide valve bore (162), a fifth transverse bore (174) connects the fourth transverse bore with the third control slide valve bore (164) and the pump inlet, a sixth transverse bore (176) connects the second transverse bore (168) with the third control slide valve bore (164) and the control line (116), a load-sensing control slide valve (180) on which a first and a second flange (184, 186) are formed is arranged in the first control slide valve bore (160), the first flange (184) serving to close the first control slide valve bore (160) selectively at least partially in the zone between the first and second transverse bores (166, 168) and the second flange (186) serving to close the first control slide valve bore (160) selectively at least partially in the zone between the second and third transverse bores (168, 170), one end of the load-sensing control slide valve (180) is subjected to the pressure of the signal line (122) and the other end of the load-sensing control-slide valve (180) is subjected to the pressure of the pump outlet, a pressure equalizing control slide valve (190) on which a first, a second and a third flange (192, 194, 196) are formed is arranged in the second control slide valve bore (162), the first flange (192) serving to close the second control slide valve bore (162) selectively at least partially in the zone between the fourth and first transverse bores (172, 166), the second flange (194) serving to close the second control slide valve bore (162) selectively in the zone between the first and second transverse bores (166, 168), and the third flange (196) serving to close the second control slide valve bore (162) selectively in the zone between the second and third transverse bores (168, 170), one end of the pressure equalizing control slide valve (190) is subjected to the pressure of the pump inlet and the other end of the pressure equalizing control slide valve (190) is subjected to the pressure of the pump outlet, in the third control slide valve bore (164) there is arranged a pressure relief slide valve (208) on which is formed a flange (210) serving to close the third control slide valve bore (164) selectively at least partially in the zone between the fifth and sixth transverse bores (174, 176), back pressure throttling means are arranged in the sixth bore (176) and allow an unimpeded flow from the control line (116) to the second transverse bore (168), but limit the throughflow with flow in the opposite direction.

21. Control valve according to claim 20, characterised in that the third transverse bore (170) can be connected with the pump outlet through a seventh transverse bore (178).

22. Control valve according to claim 20 or 21, characterised in that the pressure equalizing control slide valve (190) has a flow limiting passage (206) through which the pressure of the pump outlet is conveyed from the third transverse bore (170) to the adjacent end of the pressure equalizing control slide valve (190).

23. Control valve according to any one of claims 20 to 22, characterised in that the back pressure throttling means comprise a multileg body (212) which is movable between a position which allows free flow through the sixth transverse bore (176) and a position which merely allows a limited flow between the legs of the multileg body and the sixth transverse bore (176).

24. Control valve according to any one of claims 20 to 23, characterised in that each control slide valve bore (160, 162, 164) contains spring means by which the corresponding control slide valves (180, 190, 208) are biased.

25. Control valve according to claim 24, characterised in that the spring means in the second control slide valve bore (162) are adjustable.

26. Control valve for an adjusting pump for use in a control circuit for a hydraulic adjusting pump (300) adjustable by a pressure which can be supplied by way of a control line (306), with a control valve (308) which can be actuated by the difference between the outlet pressure and the inlet pressure of the adjusting pump (300), the control valve (308) having a first connection which can be connected to the pump control line (306), a second connection which can be connected to the pump inlet and a third connection which can be connected to the pump outlet, the control valve (308) moreover connecting the first with the second connection in a first position and the first with the third connection in another position, and with an excess pressure means (320) by which a connection is established between the first connection and the pump inlet when the difference in pressure between the first connection and the pump inlet exceeds a predeterminable value, characterised in that the control valve comprises a valve body (326) with a first and a second control slide valve bore and a first, a second, a third and a fourth transverse bore, the control slide valve bores are connected with one another by the first, second and third transverse bores, the first transverse bore is connected with the pump inlet and the third transverse bore with the pump control line (306) and the fourth transverse bore is connected both with the pump outlet and with the first control slide valve bore, a pressure equalizing control slide valve is arranged in the first control slide valve bore and has a first, a second and a third flange, the first flange serving to close the first control slide valve bore selectively at least partially in the zone between the first and second transverse bores, the second flange serving to close the first control slide valve bore selectively at least partially in the zone between the second and third transverse bores, and the third flange serving to close the first control slide valve bore selectively at least partially in the zone between the third and fourth transverse bores, the ends of the pressure equalizing control slide valve are subjected to the pressure of the pump inlet and that of the pump outlet, respectively, and in the second control slide valve bore (324) there is arranged a pressure relief slide valve (320) on which is formed a flange (330) serving to close the second control slide valve bore (324) selectively at least partially in the zone between the first and second transverse bores.

27. Control valve according to claim 26, characterised in that the valve body (326) moreover comprises a fifth, a sixth and a seventh transverse bore which establish connections between the first, third and fourth transverse bores and the pump inlet, the control line (306) and the pump outlet, respectively.

28. Control valve according to claim 26 or 27, characterised in that the pressure equalizing control slide valve has a flow limiting passage through which the pressure of the pump outlet is conveyed from the fourth transverse bore to the adjacent end of the pressure equalizing control slide valve.

29. Control valve according to any one of claims 26 to 28, characterised in that each control slide valve bore contains spring means by which the corresponding control slide valves are biased.

30. Control valve according to claim 29, characterised in that the spring means in the first control slide valve bore are adjustable.

**Revendications**

1. Circuit de commande pour un organe de réglage hydraulique (10,110), qui peut être réglé au moyen d'une pression pouvant être envoyée par l'intermédiaire d'une canalisation de commande (44,116), et comportant des moyens en forme de soupapes (26,124,138), qui peuvent être actionnés par une différence entre la pression de sortie de l'organe de réglage (10,110) et la pression, qui est envoyée par une canalisation de transmission de signaux (24,122) et correspond à une demande désirée de charge applicable à l'organe de réglage (10,110), de sorte que, pour une différence de pression suffisante, les moyens en forme de soupapes (26,124,138) prennent une seconde position, dans laquelle il existe une liaison entre la canalisation de commande (44,116) et la sortie (18) de l'organe de réglage (10,110), et des moyens permettant de raccorder la canalisation de commande (44,116) à l'entrée de l'organe de réglage (10,110), caractérisé en ce que des premiers moyens (38,148) de limitation du débit sont insérés dans une canalisation de liaison (30) qui s'étend entre les moyens formant soupapes (26,124,138) et la canalisation de commande (44,116), qu'entre les moyens formant soupapes (26,124,138) et l'entrée (12) de l'organe de réglage (10,110) sont disposés des moyens à surpression (46,152), qui permettent un écoulement depuis le côté des moyens formant soupapes (28,124,132) en direction de l'entrée (12) de l'organe de réglage (10,110) lorsque la pression du côté des moyens formant soupapes (26,124,138) dépasse une valeur pouvant être prédéterminée, et qu'en parallèle avec les premiers moyens de limitation de débit (38,148) sont disposés des moyens d'écoulement unidirectionnel (48,150), qui permettent un écoulement depuis la canalisation de commande (44,116) en direction des moyens formant soupapes (26,124) lorsqu'une différence suffisamment élevée de pression est appliquée par l'intermédiaire des moyens d'écoulement unidirectionnel (48,150).

2. Circuit de commande pour un organe de réglage hydraulique (10,110), qui peut être réglé au moyen d'une pression pouvant être envoyée par l'intermédiaire d'une canalisation de commande (44,116), et comportant des moyens en forme de soupapes (26,124,138), qui peuvent être actionnés par une différence entre la pression de sortie de l'organe de réglage (10,110) et la pression, qui est envoyée par une canalisation de transmission de signaux (24,122) et correspond à une demande désirée de charge applicable à l'organe de réglage (10,110), de sorte que, pour une différence de pression suffisante, les moyens en forme de soupapes (26,124,138) prennent une seconde position, dans laquelle il existe une liaison entre la canalisation de commande (44,116) et la sortie (18) de l'organe de réglage (10,110), et des moyens permettant de raccorder la canalisation de commande (44,116) à l'entrée de l'organe de réglage (10,110), caractérisé en ce que des premiers moyens d'écoulement (38,148) sont insérés dans une canalisation de liaison (30) entre les moyens formant soupapes (26,124,138) et la canalisation de commande (44,116), qu'au moins des seconds moyens de limitation de débit (40,118) sont insérés dans une canalisation de liaison entre la canalisation de commande (44,107) et l'entrée (12) de la pompe, et qu'entre les moyens formant soupapes (26,124,138) et l'entrée (12) de l'organe de réglage (10,110) sont disposés des moyens à surpression (46,152) qui permettent un écoulement à partir du côté des moyens formant soupapes (26,124,138) en direction de l'entrée (12) de l'organe de réglage (10,110), lorsque la pression du côté des moyens formant soupapes (26,124,138) dépasse une valeur pouvant être prédéterminée.

3. Circuit de commande selon la revendication 2, caractérisé en ce qu en parallèle avec les premiers moyens de limitation de débit (38,148) sont disposés des moyens d'écoulement unidirectionnel (48,150), qui permettent une circulation depuis la canalisation de commande (44,116) en direction des moyens formant soupapes (26,124), lorsqu'une différence de pression suffisamment élevée est appliquée par l'intermédiaire des moyens d'écoulement unidirectionnel (48,150).

4. Circuit de commande selon l'une des revendications 1 à 3, caractérisé en ce que les moyens formant soupapes (28,124,138) possèdent une première position, dans laquelle ils relient la canalisation de commande (44,116) à l'entrée (12) de la pompe.

5. Circuit de commande selon l'une des revendications 1 à 4, caractérisé en ce que les moyens de réduction de pression (46) sont disposés de manière à être branchés en parallèle avec les premiers moyens de limitation de débit (38).

6. Circuit de commande selon l'une des revendications 1 à 5, caractérisé en ce que les moyens formant soupapes (28,124,138) sont précontraints en direction de leur première position.

7. Circuit de commande selon l'une des revendications 1 à 6, caractérisé en ce que l'organe de réglage hydraulique (10,110) appartient au groupe des soupapes et des pompes de réglage.

8. Circuit de commande selon l'une des revendications 1 à 7, caractérisé en ce que l'organe de réglage hydraulique (10,110) est une pompe à cylindrée variable à piston radial, dans laquelle le débit augmente lorsque la pression diminue dans la canalisation de commande (44,116) et diminue lorsque la pression augmente dans la canalisation de commande (44,116).

9. Circuit de commande selon l'une des revendications 1 à 8, caractérisé en ce que les moyens d'écoulement unidirectionnel (48,35) contiennent une soupape antiretour.

10. Circuit de commande selon l'une des revendications 1 à 9, caractérisé en ce que les premiers et/ou les seconds moyens de limitation de débit (38, 40) contiennent un étranglement.

11. Circuit de commande selon l'une des revendications 1 à 10, caractérisé en ce que les moyens d'écoulement unidirectionnel (48) autorisent un écoulement caractéristique supérieur, à peu près d'un ordre de grandeur, à l'écoulement caractéristique de l'un des deux moyens de limitation de débit (38,40) et desdits moyens de réduction de pression (46).

12. Circuit de commande selon la revendication 11, caractérisé en ce que les premiers moyens de limitation de débit (38) permettent un débit d'environ 0,04 l par seconde, que les moyens d'écoulement unidirectionnel (48) permettent un débit d'environ 0,2 l par seconde et que les moyens de réduction de pression (46) permettent un débit d'environ 0,03 l par seconde.

13. Circuit de commande selon les revendications 11 ou 12, caractérisé en ce que les premiers moyens de limitation de débit (38) contiennent un étranglement possédant un diamètre d'environ 2,5 mm et que les seconds moyens de limitation de débit (40) contiennent un étranglement possédant un diamètre d'environ 1,5 mm.

14. Circuit de commande selon l'une des revendications 2 à 12, caractérisé en ce que les premiers moyens de limitation de débit (38) contiennent un étranglement possédant un diamètre d'environ 3,0 mm et que les seconds moyens de limitation de débit (40) contiennent un étranglement possédant un diamètre d'environ 2,5 mm, et que le débit maximum dans les premiers et seconds moyens de limitation de débit est égal à 0,13 l par seconde.

15. Circuit de commande selon l'une des revendications 1 à 14, caractérisé en ce que
   a) les moyens formant soupapes (26) contiennent une soupape de commande à trois voies (124), qui détecte une charge, et une soupape de compensation de pression à quatre voies (138), ces soupapes pouvant être commandées au choix entre deux positions, respectivement au moyen de la différence entre deux pressions appliquées, que la soupape de commande (124) détectant une charge peut être raccordée par un premier raccord à la canalisation de commande (116), par un second raccord à l'entrée (112) de la pompe et par un troisième raccord à la sortie (114) de la pompe et peut être commandée par la différence entre la pression de sortie de la pompe et la pression de la canalisation de commande (122) signalant la charge, auquel cas, dans une première position, la soupape de commande est raccordée par son premier raccord à son second raccord et, dans une seconde position, son premier raccord est raccordé à son troisième raccord, que la soupape de compensation de pression (138) peut être raccordée par un premier raccord au second raccord de la soupape de commande (124) détectant la charge, par un second raccord au premier raccord de la soupape de commande (124), par un troisième raccord à l'entrée de la pompe et par un quatrième raccord à la sortie de la pompe, et peut être commandée par la différence entre la pression d'entrée de la pompe et la pression de sortie de la pompe, auquel cas, dans une première position de la soupape de compensation de pression (138), ses premier et troisième raccords sont raccordés entre eux et une liaison entre ses second et quatrième raccords est bloquée, tandis que dans une seconde position, les second et quatrième raccords de cette soupape sont raccordés entre eux et une liaison entre les premier et troisième raccords est bloquée,
   b) que les premiers moyens de limitation de débit (38) sont des moyens d'étranglement (148), qui sont disposés dans une canalisation de liaison entre la canalisation de commande (116) et le premier raccord de la soupape de commande (124) détectant la charge,
   c) que les moyens d'étranglement de débit (148) relient la canalisation (116) de commande de la pompe au premier raccord de la soupape formant tiroir (124) qui détecte la charge,
   d) que les moyens d'écoulement unidirectionnel (48) contiennent une soupape antiretour (150), qui est branchée en parallèle avec les moyens d'étranglement (58) et permet un écoulement depuis la canalisation de commande (116) de la pompe en direction du premier raccord de la soupape de commande (124) détectant la charge, mais pas dans le sens inverse, et

e) que les moyens de réduction de pression (46) contiennent une soupape de détente (152), qui relie le premier raccord de la soupape de commande (124) détectant la charge à l'entrée de la pompe, dans la mesure où la différence de pression entre ces deux points dépasse une valeur pouvant être prédéterminée.

16. Circuit de commande selon la revendication 15, caractérisé en ce que lesdites soupapes peuvent être commandées progressivement.

17. Circuit de commande selon la revendication 15 ou 16, caractérisé en ce que chacune desdites soupapes est une soupape à tiroir à commande pilote.

18. Circuit de commande selon l'une des revendications 15 à 16, caractérisé en ce que l'organe de réglage hydraulique (10) est une pompe à piston radial (110) et que le circuit de commande comporte d'autres seconds moyens de limitation de débit (118), qui relient l'entrée de la pompe à la canalisation de commande (116).

19. Circuit de commande selon l'une des revendications 15 à 18, caractérisé en ce qu'il est prévu d'autres moyens de limitation de débit (142), qui réduisent la vitesse de réponse des moyens de commande de la soupape de compensation de pression (138).

20. Soupape de commande pour pompe à cylindrée variable, destinée à être utilisée dans un circuit de commande selon l'une des revendications 15 à 19, caractérisée en ce que la soupape de commande contient un corps de soupape possédant des premier, second et troisième perçages (160,162,164) logeant des tiroirs de commande, une extrémité du premier perçage (160) logeant un tiroir de commande pouvant être raccordée à la canalisation de signalisation de transmission de signaux (122), que des premier, second et troisièmes perçages transversaux (166,168,170) relient entre eux les premier et second perçages (160,162) logeant des tiroirs de commande et que le troisième perçage transversal (170) peut être relié à la sortie de la pompe, qu'un quatrième perçage transversal (172) est raccordé au second perçage (162) logeant un tiroir de commande, qu'un cinquième perçage transversal (174) relie le quatrième perçage transversal au troisième perçage (164) logeant un tiroir de commande et à l'entrée de la pompe, qu'un sixième perçage transversal (176) relie le second perçage transversal (168) au troisième perçage (164) logeant un tiroir de commande et à la canalisation de commande (116), que dans le premier perçage (160) est disposé un tiroir de commande (180) détectant la charge et sur lequel sont formées par moulage des première et seconde portées (184,186), la première portée (184) étant utilisée pour obturer au choix au moins partiellement le premier perçage (160) logeant le tiroir de commande dans la zone comprise entre les premier et second perçages transversaux (166,168), et la seconde portée (186) servant à obturer au choix au moins partiellement le premier perçage (160) logeant le tiroir de commande, dans la zone comprise entre les second et troisième perçages transversaux (168,170), et qu'une extrémité du tiroir de commande (180) détectant la charge est soumise à la pression de la canalisation (122) de transmission de signaux et que l'autre extrémité du tiroir de commande (180), qui détecte la charge, est soumise à la pression de la sortie de la pompe, que dans le second perçage (162) est disposé un tiroir de commande (190) compensant la pression, sur lequel sont moulées des première, seconde et troisième portées (192,194,196), la première portée (192) servant à obturer au choix au moins partiellement le second perçage (162) logeant le tiroir de commande, dans la zone située entre les quatrième et premier perçages transversaux (172,166), la seconde portée (194) servant à obturer au choix le premier perçage (162) logeant le tiroir de commande dans la zone comprise entre les premier et second perçages transversaux (166,168), et la troisième portée (196) servant à obturer au choix le second perçage (162) logeant un tiroir de commande dans la zone comprise entre les second et troisième perçages transversaux (168,170), qu'une extrémité du tiroir de commande (190), qui compense la pression, est soumise à la pression de l'entrée de la pompe et que l'autre extrémité du tiroir de commande (190) qui compense la pression est soumise à la pression de la sortie de la pompe, que dans le troisième perçage (164) est disposé un tiroir de détente (208), sur lequel est formée par moulage une portée (210) qui sert à obturer au choix au moins partiellement le troisième perçage (164) logeant un tiroir de commande dans la zone située entre les cinquième et sixième perçages transversaux (174,176), que dans le sixième perçage (176) sont disposés des moyens d'étranglement antiretour, qui permettent un écoulement libre depuis la canalisation de commande (116) en direction du second perçage transversal (168), mais limitent le débit dans le cas d'un écoulement dans le sens inverse.

21. Soupape de commande selon la revendication 20, caractérisée en ce que le troisième perçage transversal (170) peut être raccordé à la sortie de la pompe par un septième perçage transversal (178).

22. Soupape de commande selon la revendication 20 ou 21, caractérisée en ce que le tiroir de commande (190), qui compense la pression, possède un passage (206) qui limite le débit et par lequel la pression à la sortie de la pompe est envoyée depuis le troisième perçage transversal (170) à l'extrémité voisine du tiroir de commande (190) qui compense la pression.

23. Soupape de commande selon l'une des revendications 20 à 22, caractérisée en ce que les moyens d'étranglement antiretour contiennent un quatrième corps (212) à bossages multiples qui peut être déplacé entre une position, qui autorise le passage libre dans le sixième perçage transversal (176), et une position qui permet uniquement un débit limité entre les bossages du corps à bossages multiples et le sixième perçage transversal (176).

24. Soupape de commande selon les revendications 20 à 23, caractérisée en ce que chaque perçage (160,162,164) logeant un tiroir de commande contient des moyens à ressorts, qui sont placés sous précontrainte par les tiroirs de commande correspondants (180,190,208).

25. Soupape de commande selon la revendication 24, caractérisée en ce que les moyens à ressorts peuvent être déplacés dans le second perçage (162) logeant un tiroir de commande.

26. Soupape de commande pour une pompe à cylindrée variable destinée à être utilisée dans un circuit de commande pour une pompe hydraulique à cylindrée variable (300), qui peut être réglée par une pression pouvant être délivrée par l'intermédiaire d'une canalisation de commande (306), et comportant une soupape de commande (308), qui peut être actionnée par la différence entre la pression de sortie et la pression d'entrée de la pompe à cylindrée variable (300), la soupape de commande (308) comportant un premier raccord, qui peut être raccordé à la canalisation (306) de commande de la pompe, un second raccord qui peut être raccordé à l'entrée de la pompe et un troisième raccord qui peut être raccordé à la sortie de la pompe, et en outre, la soupape de commande (308) raccordant dans une première position, le premier au second raccord et, dans une autre position, le premier au troisième raccord, et comportant des moyens de surpression (320), qui établissent une liaison entre le premier raccord et l'entrée de la pompe, lorsque la différence de pression entre le premier raccord et l'entrée de la pompe dépasse une valeur pouvant être prédéterminée, caractérisée en ce que la soupape de commande comporte un corps de soupape (326) comprenant des premier et second perçages logeant des tiroirs de commande et des premier, second, troisième et quatrième perçages transversaux, que les perçages logeant les tiroirs de commande sont raccordés entre eux par les premier, second et troisième perçages transversaux, que le premier perçage transversal est raccordé à l'entrée de la pompe et que le troisième perçage transversal est raccordé à la canalisation de commande (306) de la pompe tandis que le quatrième perçage transversal est raccordé aussi bien à la sortie de la pompe qu'au premier perçage logeant un tiroir de commande, qu'un tiroir de commande compensant la pression est disposé dans le premier perçage logeant un tiroir de commande et comporte des première, seconde et troisième portées, la première portée servant à obturer au choix au moins partiellement le premier perçage logeant un tiroir de commande dans la zone située entre les premier et second perçages transversaux, la seconde portée servant à obturer au choix au moins partiellement le premier perçage logeant un tiroir de commande dans la zone comprise entre les second et troisième perçages transversaux, et la troisième portée servant à obturer au choix au moins partiellement le premier perçage logeant un tiroir de commande dans la zone comprise entre les troisième et quatrième perçages transversaux, les extrémités du tiroir de commande compensant la pression sont soumises à la pression présente à l'entrée de la pompe et à celle présente à la sortie de la pompe, et que dans le second perçage (324) est disposé un tiroir de détente (328), sur lequel est formée par moulage une portée (330) qui sert à obturer au moins partiellement au choix le second perçage (324) logeant un tiroir de commande dans la zone comprise entre les premier et second perçages transversaux.

27. Soupape de commande selon la revendication 26, caractérisée en ce que le corps de soupape (326) contient en outre des cinquième, sixième et septième perçages transversaux, qui établissent des liaisons entre les premier, troisième et quatrième perçages transversaux et l'entrée de la pompe, la canalisation de commande (306) et la sortie de la pompe.

28. Soupape de commande selon la revendication 26 ou 27, caractérisée en ce que le tiroir de commande compensant la pression possède un passage limitant le débit et par lequel la pression de la sortie de la pompe est envoyée depuis le quatrième perçage transversal à l'extrémité voisine du tiroir de commande compensant la pression.

29. Soupape de commande selon l'une des revendications 26 à 28, caractérisée en ce que chaque perçage logeant un tiroir de commande contient des moyens à ressorts qui sont placés sous précontrainte par les tiroirs de commande correspondants.

30. Soupape de commande selon la revendication 29, caractérisée en ce que les moyens à ressorts peuvent être déplacés dans le premier perçage logeant un tiroir de commande.

# FIG.1

Last

Last-Fühlung

FIG.2

FIG.6

FIG. 5

FIG. 4

FIG. 3

EP 0 294 776 B1

# FIG. 7